# EUROPEAN PATENT SPECIFICATION

(11) **EP 4 618 522 B1**
(45) Date of publication and mention of the grant of the patent: **04.11.2026**
(21) Application number: 23903955.5
(22) Date of filing: 12.12.2023
(51) Int. Cl.: H04M 1/02, G06F 1/16, H01Q 1/24

(54) **ELECTRONIC DEVICE COMPRISING RETAINER**
ELEKTRONISCHE VORRICHTUNG MIT HALTER
DISPOSITIF ÉLECTRONIQUE COMPRENANT UN DISPOSITIF DE RETENUE

(30) Priority: 12.12.2022 KR 20220172875; 22.12.2022 KR 20220181766
(43) Date of publication of application: 17.09.2025
(73) Proprietor: Samsung Electronics Co., Ltd., Suwon-si, Gyeonggi-do 16677 (KR)
(72) Inventor: CHO, Joongyeon, Suwon-si, Gyeonggi-do 16677 (KR); KANG, Youngmin, Suwon-si, Gyeonggi-do 16677 (KR); SHIN, Moonchul, Suwon-si, Gyeonggi-do 16677 (KR); AHN, Jaeuk, Suwon-si, Gyeonggi-do 16677 (KR); YOON, Yeonggyu, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR)
(74) Representative: Appleyard Lees IP LLP
(86) International application number: PCT/KR2023/020417
(87) International publication number: WO 2024/128752

(56) References cited:
- WO-A1-2022/019364
- CN-A- 115 064 063
- CN-A- 115 219 152
- KR-A- 20200 099 455
- KR-A- 20220 041 046
- US-A1- 2021 208 629
- US-A1- 2022 104 364
- US-A1- 2022 113 764
- US-A1- 2022 183 173

## Description

### [Technical Field]

Various embodiments of the disclosure relate to an electronic device including a retainer.

### [Background Art]

Electronic devices are gradually becoming slimmer and more rigid, being enhanced in design aspects, and being improved to differentiate functional elements thereof. Electronic devices are gradually evolving from a uniform rectangular shape to diverse shapes. An electronic device may have a transformable structure that is convenient to carry and enables the use of a large-screen display. The electronic device may have a structure capable of making the display area of a flexible display (e.g., a rollable display) variable through supporting by housings that operate in a sliding manner relative to each other (e.g., a rollable structure or a slidable structure). Such an electronic device may require an improved assembly structure that allows for the assembly of one housing relative to the other. An example of such an electronic device is provided by US 2022/183173 A1.

### [Disclosure of Invention]

### [Technical Problem]

According to various embodiments, an electronic device may include a rollable electronic device (e.g., a slidable electronic device) in which the display area of a flexible display (e.g., a rollable display) may be expanded and/or contracted depending on an operational state. The rollable electronic device may include a first housing (e.g., a book cover or a first housing unit) and a second housing (e.g., a front cover or a second housing unit) that are movably coupled to each other in a manner in which they are at least partially fitted together. For example, the first housing and the second housing may operate to slide relative to each other and support at least a portion of a flexible display (e.g., a rollable display, an expandable display, or a stretchable display). The flexible display may be configured to have a first display area in a slide-in state and a second display area, larger than the first display area, in a slide-out state.

According to various embodiments, the rollable electronic device may be assembled by slidably coupling a frame cover of a first housing to a second housing, coupling a flexible display to be supported by the frame cover and the second housing, and then inserting the assembled components into the first housing. Guide rails may be respectively fixed to both side surfaces of the frame cover. The flexible display may be supported by a support member (e.g., multiple bars, a support bar, a bendable member, or a multi-bar assembly), and both ends of the support member may be disposed to be guided by the guide rails. For example, after the frame cover is inserted into the first housing, the frame cover may be coupled to the first housing through a fastening member such as a screw penetrating from an outer surface of the first housing. In this case, when the frame cover is at least partially inserted and fixed in the first housing, if a gap occurs between the guide rails and the first housing, deformation or malfunction of the housings may occur during sliding operation. According to various embodiments, the frame cover assembled with the first housing may have a size and shape such that no gap is present between the guide rails and the inner surface of the first housing.

However, such a tight assembly structure may increase friction between the guide rails and the first housing, making assembly difficult. For example, in the case where the first housing and the guide rails are assembled using only screws, a relatively narrow fastening structure may cause the screws to break when the electronic device is dropped. In addition, when at least a portion of the first housing is used as an antenna radiator, screws alone may not be sufficient to ensure a stable electrical connection structure (e.g., a grounding structure or a power feeding structure).

Various embodiments of the disclosure may provide an electronic device including a retainer having an improved assembly structure.

Various embodiments may provide an electronic device that includes a retainer configured to reduce damage caused by external impacts, such as drops, by maintaining a gap between the frame cover and the first housing after assembly.

Various embodiments may provide an electronic device that includes a retainer having an improved electrical connection structure for at least a portion of the first housing used as an antenna.

However, the problems that the disclosure seeks to solve are not limited to the aforementioned problems, and may be expanded in various ways without departing from the spirit and scope of the disclosure.

### [Solution to Problem]

According to various embodiments, an electronic device includes a first housing, a second housing coupled to be slidable from the first housing, a frame cover disposed inside the first housing, and at least one retainer positioned to face a side surface of the frame cover through at least one through-hole provided in a side surface of the first housing. After penetrating through the through-hole, the retainer maintains a gap between the frame cover and an inner surface of the first housing through rotation.

According to various embodiments, an electronic device includes a first housing, a second housing coupled to slide from the first housing, a support member having one end fixed to the second housing and selectively received inside the first housing so as not to be visible according to movement of the second housing, a flexible display disposed to be supported by the support member and the second housing, a frame cover disposed inside the first housing, guide rails respectively fixed to both side surfaces of the frame cover, at least one retainer positioned to face at least a portion of a corresponding one of the guide rails through at least one through-hole provided in a side surface of the first housing, and a side surface plate disposed on the side surface of the first housing and fastened to the corresponding one of the guide rail together with the retainer through a fastening member. After penetrating through the through-hole, the retainer maintains a gap between the corresponding one of the guide rails and an inner surface of the first housing through rotation.

### [Advantageous Effects of Invention]

In an electronic device according to exemplary embodiments of the disclosure, when assembling the frame cover to the first housing, a gap between the each guide rail and the first housing may be secured, thereby improving assemblability, and after the assembly, the gap may be maintained by at least one retainer, thereby reducing the likelihood of damage to the electronic device due to external impacts. In addition, by sufficiently ensuring the contact surface between the first housing and each guide rail through a conductive retainer, stable electrical connection may be achieved even when the first housing is used as an antenna radiator.

In addition, various effects that are directly or indirectly understood through this document may be provided.

The effects that are capable of being obtained by the disclosure are not limited to those described above, and other effects not described above may be clearly understood by a person ordinarily skilled in the art to which the disclosure belongs based on the following description.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIGS. 2A and 2B are views illustrating front and rear surfaces of an electronic device according to various embodiments of the disclosure in a slide-in state.
FIGS. 3A and 3B are views illustrating front and rear surfaces of the electronic device according to various embodiments of the disclosure in a slide-out state.
FIG. 4 is an exploded perspective view of an electronic device according to various embodiments of the disclosure.
FIG. 5A is a cross-sectional view of the electronic device according to various embodiments of the disclosure taken along line 5a-5a in FIG. 2A.
FIG. 5B is a configuration view of the electronic device according to various embodiments of the disclosure in the slide-in state.
FIG. 6A is a cross-sectional view of the electronic device according to various embodiments of the disclosure taken along line 6a-6a in FIG. 3A.
FIG. 6B is a configuration view of the electronic device according to various embodiments of the disclosure in the slide-out state.
FIG. 7 is a configuration view illustrating a guide structure of guide rails and support members according to various embodiment of the disclosure.
FIG. 8 is a partial cross-sectional view of an electronic device according to various embodiments of the disclosure taken along line 8-8 of FIG. 2A.
FIGS. 9A to 9C are views illustrating a retainer viewed from various directions, according to various embodiments of the disclosure.
FIG. 10A is a perspective view of an electronic device including through-holes according to various embodiments of the disclosure.
FIG. 10B is an enlarged view of an area including through-holes of a first housing according to various embodiments of the disclosure.
FIG. 11 is a process view illustrating an assembly process of an electronic device according to various embodiments of the disclosure.
FIG. 12A is a partial perspective view of an electronic device illustrating a state in which retainers are inserted through through-holes, according to various embodiments of the disclosure.
FIG. 12B is a partial side view of an electronic device illustrating a state in which the retainers are inserted through the through-holes, according to various embodiments of the disclosure.
FIG. 12C is a partial cross-sectional view of the electronic device taken along line 12c-12c in FIG. 12B, according to various embodiments of the disclosure.
FIG. 12D is a partial cross-sectional view of an electronic device as viewed along line 12D-12D of FIG. 12B, according to various embodiments of the disclosure.
FIG. 13A is a partial side view of the electronic device illustrating a state in which the retainer inserted through through-holes are rotated, according to various embodiments of the disclosure.
FIG. 13B is a partial cross-sectional view of the electronic device taken along line 13b-13b in FIG. 13A, according to various embodiments of the disclosure.
FIG. 13C is a partial cross-sectional view of the electronic device taken along line 13c-13c in FIG. 13A, according to various embodiments of the disclosure.
FIGS. 13D and 13E are partial cross-sectional views of the electronic device illustrating a state in which a retainer inserted through a through-hole is rotated, according to various embodiments of the disclosure.
FIG. 14A is a partial perspective view of the electronic device illustrating a state in which a side surface plate is coupled to a side surface of the electronic device according to various embodiments of the disclosure.
FIG. 14B is a perspective view of a side surface plate including a flow prevention protrusion, according to various embodiments of the disclosure.
FIG. 15A is a partial side view of an electronic device illustrating a state in which the side surface plate is fixed by screws, according to various embodiments of the disclosure.
FIG. 15B is a partial cross-sectional view of the electronic device taken along line 15B-15B of FIG. 15A, according to various embodiments of the disclosure.
FIG. 15C is a partial cross-sectional view of the electronic device taken along line 15c-15c in FIG. 15A, according to various embodiments of the disclosure.
FIGS. 16A and 16B are views illustrating a partial side surface of the electronic device in which a cover member is coupled, according to various embodiments of the disclosure.
FIG. 16C is a partial cross-sectional view of the electronic device taken along line 16C-16C of FIG. 16B, according to various embodiments of the disclosure.
FIGS. 17A and 17B are schematic views illustrating the arrangement structure of retainers after rotation, according to various embodiments of the disclosure.
FIG. 18 is a perspective view of a retainer including a contact spring according to various embodiments of the disclosure.
FIG. 19A is a perspective view illustrating a portion of a side surface of an electronic device in which the retainers of FIG. 18 are assembled, according to various embodiments of the disclosure.
FIG. 19B is a partial cross-sectional view of the electronic device taken along line 19b-19b in FIG. 19A, according to various embodiments of the disclosure.

### [Mode for the Invention]

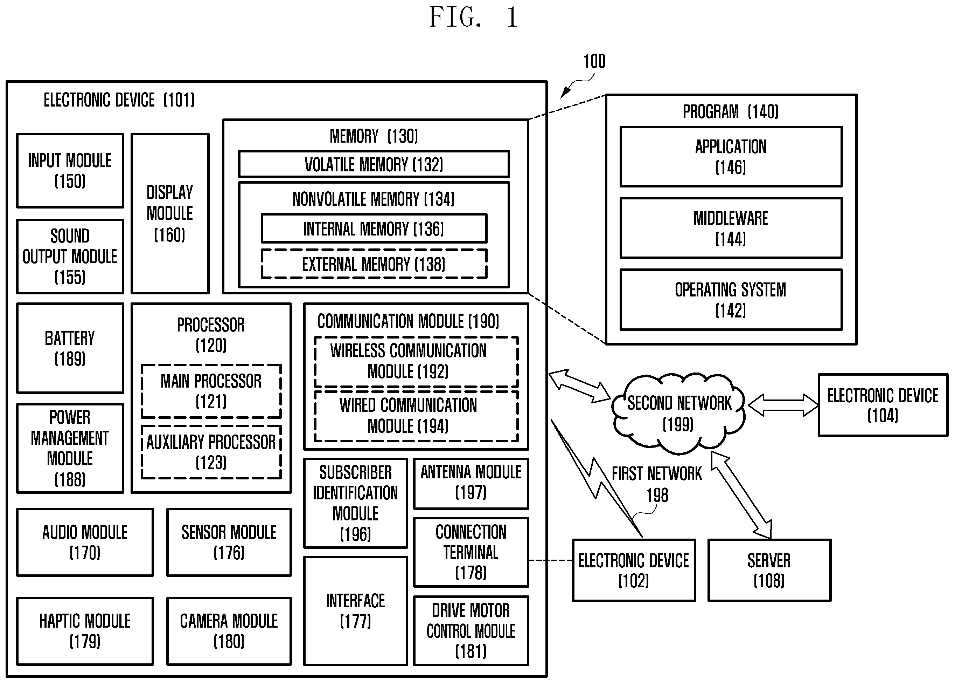

FIG. 1 is a block diagram illustrating an electronic device 101 in a network environment 100 according to various embodiments.

With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such leaming may be performed, e.g., by the electronic device 101 where the artificial intelligence is performed or via a separate server (e.g., the server 108). Leaming algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine leaming and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

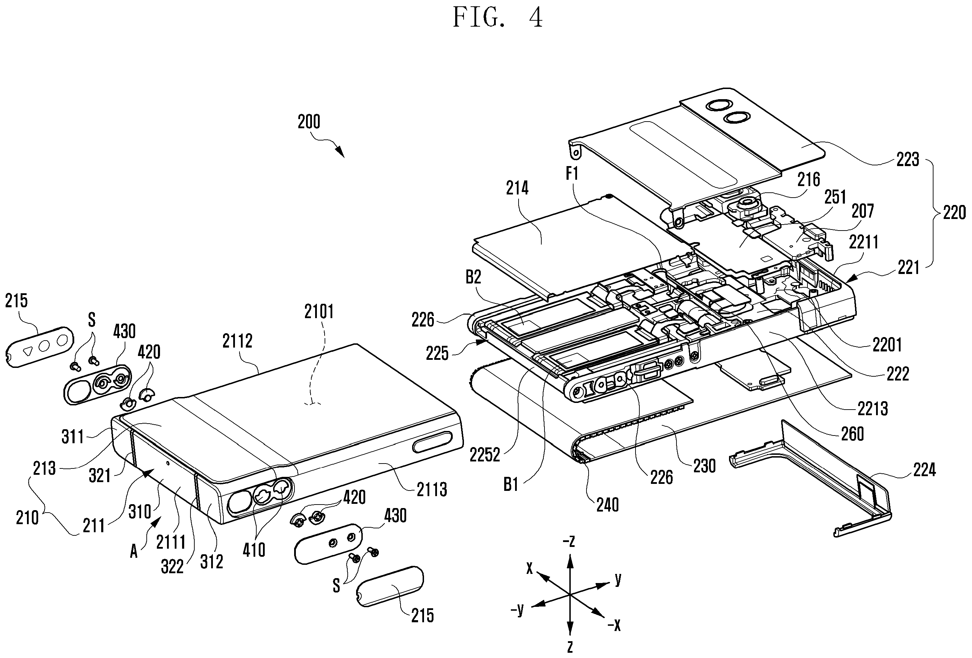

According to various embodiments, the sensor module 176 may include a movement distance detection sensor to detect a movement distance of a second housing (e.g., a second housing 220 in FIG. 4) from a first housing (e.g., a first housing 210 in FIG. 4) of an electronic device (e.g., an electronic device 200 of FIG. 4). In one embodiment, through movement of the second housing 220 from the first housing 210, the sensor module 176 may detect a slide-in state being a first state, a slide-out state being a second state, or an intermediate state being a third state between the slide-in state and the slide-out state. In a certain embodiment, the processor 120 may detect the movement distance in real time through the sensor module 176 while the second housing 220 is moved from the first housing 210, and control the display module 160 to display an object in correspondence to the changing display area through a flexible display (e.g., flexible display 230 in FIG. 4). In one embodiment, the electronic device 101 may include a drive motor control module 181 to control the operation of a drive motor (e.g., DC motor or stepping motor) (e.g., drive motor 260 in FIG. 4) disposed inside the electronic device. In an embodiment, the drive motor control module 181 may be replaced by the processor 120.

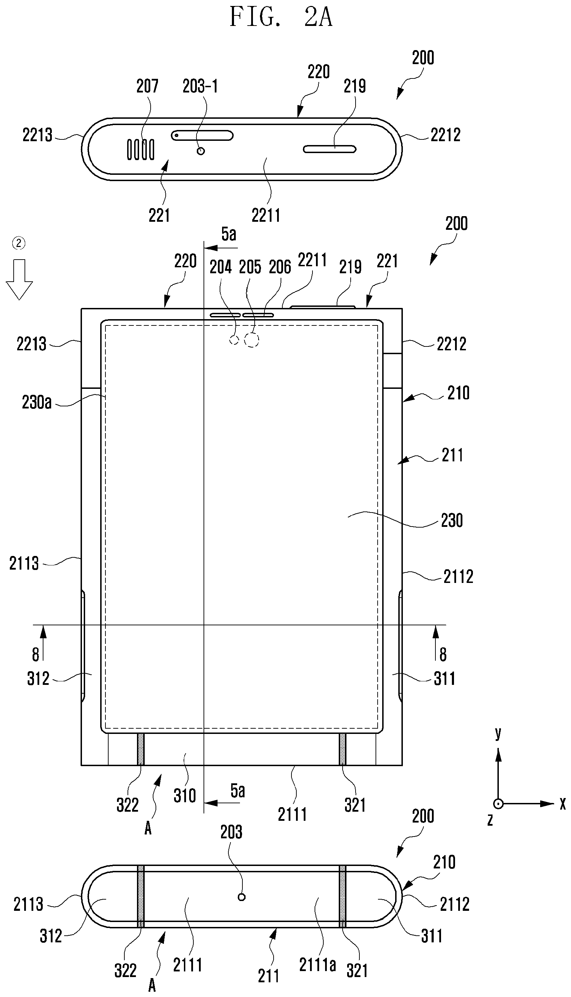

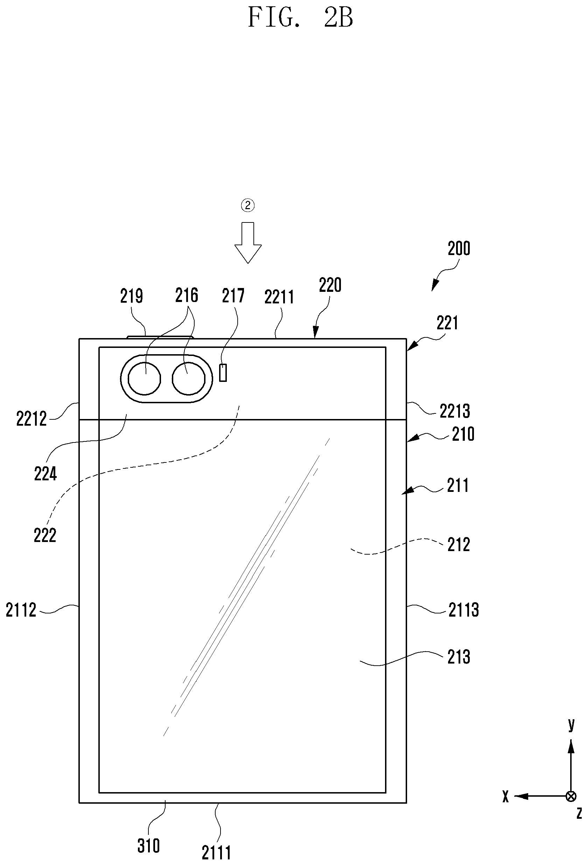

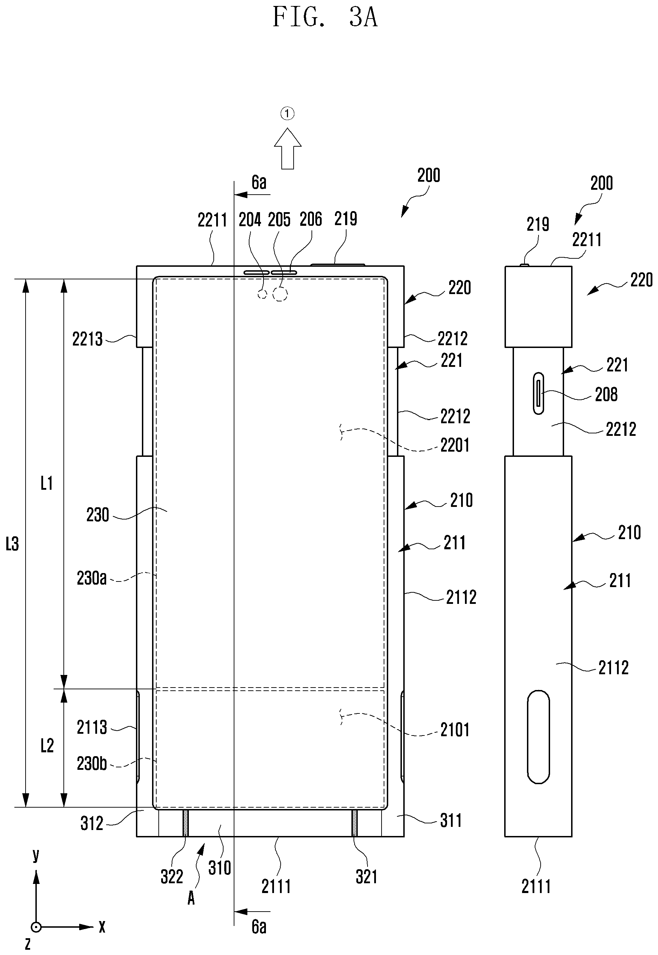

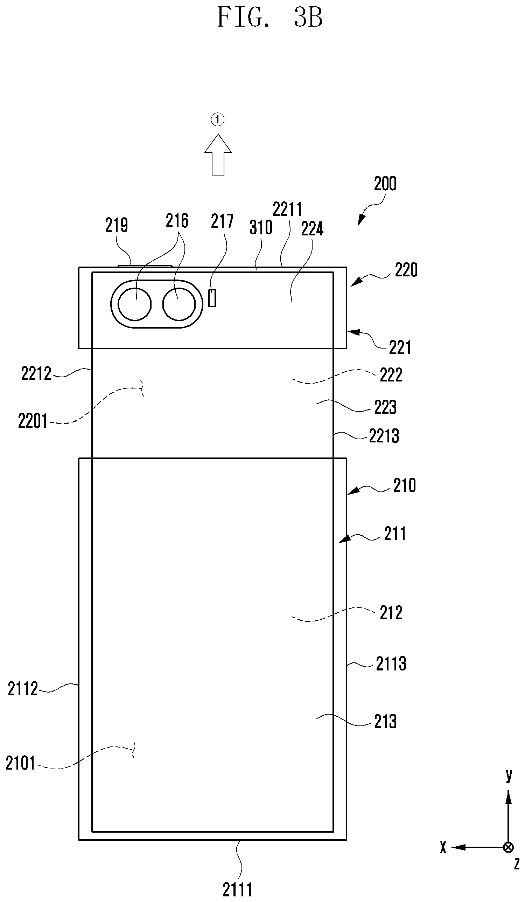

FIGS. 2A and 2B are views illustrating front and rear surfaces of an electronic device according to various embodiments of the disclosure in a slide-in state. FIGS. 3A and 3B are views illustrating front and rear surfaces of the electronic device according to various embodiments of the disclosure in a slide-out state.

The electronic device 200 of FIGS. 2A to 3B may be at least partially similar to the electronic device 101 of FIG. 1 or may further include other embodiments of the electronic device.

Referring to FIGS. 2A to 3B, the electronic device 200 may include a first housing 210, a second housing 220 coupled to be slidable in a predetermined direction (e.g., in direction ① or direction ②) (e.g., the ±y-axis direction) from the first housing 210, and a flexible display 230 (e.g., a rollable display, an expandable display, or a stretchable display) disposed to be supported by at least a portion of the first and second housings 210 and 220. In an embodiment, the second housing 220 may be slidably coupled to the first housing 210 to be slid out along a first direction (direction ①) or slid in along a second direction (direction ②) opposite to the first direction (direction ①) with respect to the first housing 210. In an embodiment, the electronic device 200 may be switched to the slide-in state (e.g., a retraction state) when at least a portion of the second housing 220 is accommodated in at least a portion of a first space 2101 defined by the first housing 210. In an embodiment, the electronic device 200 may be switched to the slide-out state (e.g., an extension state) by when at least a portion of the second housing 220 is moved from the first space 2101 in the outward direction (e.g., direction ①). In an embodiment, the electronic device 200 may include a support member (e.g., the support member 240 in FIG. 4) (e.g., a bendable member, a multi-joint hinge module, a multi-bar assembly, or multiple bars), which at least partially forms the same plane as at least a portion of the second housing 220 in the slide-out state and is at least partially accommodated in the first space 2101 of the first housing 210 in a bending manner in the slide-in state. In an embodiment, at least a portion of the flexible display 230 may be disposed to be supported by at least a portion of the second housing 220. In an embodiment, the remaining portion of the flexible display 230 may be disposed to be at least partially supported by the support member 240 (e.g., the support member 240 in FIG. 4). In an embodiment, the support member 240 may be disposed to be attached to the rear surface of the display 230. According to an embodiment, in the slide-in state, at least a portion of the flexible display 230 may be accommodated into the first space 2101 of the first housing 210 in a bending manner while being supported by the support member (e.g., the support member 240 in FIG. 4), thereby being disposed so as not to be visible from the outside. In an embodiment, in the slide-out state, at least a portion of the flexible display 230 may move to be visible from the outside while being supported by the support member (e.g., the support member 240 in FIG. 4), which at least partially defines the same plane as the second housing 220.

According to various embodiments, the electronic device 200 may include a first housing 210 including a first side surface member 211 and a second housing 220 including a second side surface member 221. In an embodiment, the first side surface member 211 may include a first side surface 2111 disposed at the bottom side of the electronic device 200 and having a first length, a second side surface 2112 extending in a perpendicular direction (e.g., the ±y-axis direction) from one end of the first side surface 2111 and having a second length, and a third side surface 2113 extending parallel to the second side surface 2112 from the other end of the first side surface 2111 and having the second length. In an embodiment, the first side surface member 211 may be at least partially made of a conductive member (e.g., metal). In some embodiments, the first side surface member 211 may be formed by coupling a conductive member and a non-conductive member (e.g., polymer). In an embodiment, the first housing 210 may include a first extension member 212 extending from at least a portion of the first side surface member 211 to at least a portion of the first space 2101. In an embodiment, the first extension member 212 may be integrated with the first side surface member 211. In some embodiments, the first extension member 212 may be formed separately from the first side surface member 211 and structurally coupled to the first side surface member 211.

According to various embodiments, the second side surface member 221 may include a fourth side surface 2211 disposed at the upper side of the electronic device 200 and having a third length, a fifth side surface 2212 extending in a perpendicular direction (e.g., the -y-axis direction) from one end of the fourth side surface 2211 to correspond to the second side surface 2112 and having a fourth length, and a sixth side surface 2213 extending in a direction parallel to the fifth side surface 2212 from the other end of the fourth side surface 2211 to correspond to the third side surface 2113 and having the fourth length. In an embodiment, the second side surface member 221 may be at least partially made of a conductive member (e.g., metal). In some embodiments, the second side surface member 221 may be formed by coupling a conductive member and a non-conductive member (e.g., polymer). In an embodiment, at least a portion of the second side surface member 221 may include a second extension member 222 extending to at least a portion of the second space 2201 in the second housing 220. In an embodiment, the second extension member 222 may be integrated with the second side surface member 221. In some embodiments, the second extension member 222 may be formed separately from the second side surface member 221 and structurally coupled to the second side surface member 221.

According to various embodiments, the second side surface 2112 and the fifth side surface 2212 may be slidably coupled to each other. In an embodiment, the third side surface 2113 and the sixth side surface 2213 may be slidably coupled to each other. In an embodiment, in the slide-in state, a portion of the fifth side surface 2212 may overlap the second side surface 2112, thereby being disposed so as not to be substantially visible from the outside. In an embodiment, in the slide-in state, the remaining portion of the fifth side surface 2212 may be disposed to be visible from the outside. In some embodiments, in the slide-in state, the fifth side surface 2212 may overlap the second side surface 2112, thereby being disposed so as not to be substantially visible from the outside. In an embodiment, in the slide-in state, a portion of the sixth side surface 2213 may overlap the third side surface 2113, thereby being disposed so as not to be substantially visible from the outside. In an embodiment, in the slide-in state, the remaining portion of the sixth side surface 2213 may be disposed to be visible from the outside. In some embodiments, in the slide-in state, the sixth side surface 2213 may overlap the third side surface 2113, thereby being disposed so as not to be substantially visible from the outside. In an embodiment, a portion of the second extension member 222 may be disposed to be visible from the outside in the slide-in state. In some embodiments, in the slide-in state, the second extension member 222 may be disposed so as not to be substantially visible from the outside by overlapping the first extension member 212.

According to various embodiments, the first housing 210 may include a first rear surface cover 213 coupled to at least a portion of the first side surface member 211. In an embodiment, the first rear surface cover 213 may be disposed by being coupled to at least a portion of the first extension member 212. In some embodiments, the first rear surface cover 213 may be integrated with the first side surface member 211. In an embodiment, the first rear surface cover 213 may be made of polymer, coated or tinted glass, ceramic, metal (e.g., aluminum, stainless steel (STS), or magnesium), or a combination of at least two of these materials. In some embodiments, the first rear surface cover 213 may extend to at least a portion of the first side surface member 211. In some embodiments, the first rear surface cover 213 may be omitted, and at least a portion of the first extension member 212 may replace the first rear surface cover 213.

According to various embodiments, the second housing 220 may include a second rear surface cover 223 coupled to at least a portion of the second side surface member 221. In an embodiment, the second rear surface cover 223 may be disposed by being coupled to at least a portion of the second extension member 222. In an embodiment, the second rear surface cover 223 may be integrated with the second side surface member 221. In an embodiment, the second rear surface cover 223 may be made of polymer, coated or tinted glass, ceramic, metal (e.g., aluminum, stainless steel (STS), or magnesium), or a combination of at least two of these materials. In some embodiments, the second rear surface cover 223 may extend to at least a portion of the second side surface member 221. In some embodiments, the second rear surface cover 223 may be omitted, and at least a portion of the second extension member 222 may be replaced with the second rear surface cover 223. In some embodiments, the second extension member 222 may be omitted, and the second rear surface cover 223 may replace the second extension member 222. In an embodiment, the second housing 220 may include a window cover 224 disposed on at least a portion on the second rear surface cover. **In** an embodiment, the window cover 224 may be disposed in an area exposed to the outside of the second housing 220 in the slide-in state, and may be made of a material that facilitates the detection of the external environment through at least one camera module 216 and/or sensor module 217 disposed in the inner space 2201 of the second housing 220. For example, the window cover 224 may be made of glass and/or a polymer material in which at least an area corresponding to the camera module 216 and/or the sensor module 217 is formed to be transparent.

According to various embodiments, the flexible display 230 may include a first portion 230a (e.g., a flat portion) that is always visible from the outside, and a second portion 230b (e.g., a bendable portion or a bending portion) that extends from the first portion 230a and is at least partially bent and accommodated into the first space 2101 of the first housing 210 so as not to be visible from the outside in the slide-in state. **In** an embodiment, at least a portion of the first portion 230a may be disposed to be supported by the second housing 220, and at least a portion of the first portion 230a and the second portion 230b may be disposed to be at least partially supported by a support member (e.g., the support member 240 in FIG. 4). In an embodiment, in the state in which the second housing 220 is slid out along the first direction (direction ①), the second portion 230b of the flexible display 230 may define substantially the same plane as the first portion 230a while being supported by the support member (e.g., the support member 240 in FIG. 4), and may be disposed to be visible from the outside. **In** an embodiment, in the state in which the second housing 220 is slid in along the second direction (direction ②), the second portion 230b of the flexible display 230 may be bent and accommodated into the first space 2101 of the first housing 210 and disposed so as not to be visible from the outside. Accordingly, the display area of the flexible display 230, may be variable as the second housing 220 is moved in a sliding manner from the first housing 210 along a predetermined direction (e.g., the ±y-axis direction).

According to various embodiments, the length of the flexible display 230 in the sliding direction (e.g., direction ① or direction ②) may vary according to the sliding movement of the second housing 220, which moves relative to the first housing 210. For example, in the slide-in state, the flexible display 230 may have a first display area corresponding to the first length L1 (e.g., an area corresponding to the first portion 230a). **In** an embodiment, in the slide-out state, depending on the moving distance of the second housing 220 moved by a second length L2 with respect to the first housing 210, the flexible display 230 may be expanded to have a second display area (e.g., an area including the first portion 230a and the second portion 230b), which corresponds to a third length L3 greater than the first length L1 and is larger than the first display area.

According to various embodiments, the electronic device 200 may include at least one of an input device (e.g., a microphone 203-1) disposed in the second space 2201 of the second housing 220, a sound output device (e.g., a phone call receiver 206 and/or a speaker 207), sensor modules 204 and 217, a camera module (e.g., the first camera module 205 or the second camera module 216), a connector port 208, a key input device 219, or an indicator (not illustrated). In an embodiment, the electronic device 200 may include another input device (e.g., the microphone 203) disposed in the first housing 210. In some embodiments, the electronic device 200 may be configured such that at least one of the above-mentioned components is omitted or other components are additionally included. In some embodiments, at least one of the above-described components may be disposed in the first space 2101 in the first housing 210.

According to various embodiments, the input device may include a microphone 203-1. In some embodiments, the input device (e.g., the microphone 203-1) may include multiple microphones arranged to detect the direction of sound. The sound output device may include, for example, a call receiver 206 and a speaker 207. In an embodiment, regardless of the slide-in/slid-out state, the speaker 207 may face the outside through at least one speaker hole provided in the second housing 220 at a position always exposed to the outside (e.g., the fourth side surface 2211). In an embodiment, in the slide-out state, the connector port 208 may face the outside through a connector port hole provided in the second housing 220. In an embodiment, the connector port 208 may be covered so as not to be visible from the outside in the slide-in state. In some embodiments, in the slide-in state, the connector port 208 may face the outside through an opening provided in the first housing 210 to correspond to the connector port hole. In some embodiments, the call receiver 206 may include a speaker that operates without a separate speaker hole (e.g., a piezo speaker).

According to various embodiments, the sensor modules 204 and 217 may generate electrical signals or data values corresponding to an internal operating state or an external environmental state of the electronic device 200. In an embodiment, the sensor modules 204 and 217 may include, for example, a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. In an embodiment, the first sensor module 204 may be disposed under the flexible display 230 in the front surface of the electronic device 200. In an embodiment, the first sensor module 204 and/or the second sensor module 217 may include at least one of a proximity sensor, an illuminance sensor, a time-of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front surface of the electronic device 200 and a second camera module 216 disposed on the rear surface of the electronic device 200. In an embodiment, the electronic device 200 may include a flash (not illustrated) located near the second camera module 216. In an embodiment, the camera modules 205 and 216 may include one or more lenses, an image sensor, and/or an image signal processor. In an embodiment, the first camera module 205 may be disposed under the flexible display 230 and may be configured to photograph a subject through a portion of an active area (e.g., a display area) of the flexible display 230.

According to various embodiments, the first camera module 205 among the camera modules and the first sensor module 204 among the sensor modules 204 and 217 may be disposed to detect the external environment through the flexible display 230. For example, the first camera module 205 or the first sensor module 204 may be disposed in the second space 2201 of the second housing 220 to be in contact with the external environment through a transmissive area or a perforated opening provided in the flexible display 230. In an embodiment, the area of the display 230 that faces the first camera module 205 may be configured as the transmissive area having a predetermined transmittance, as a portion of an active area that displays content. In an embodiment, the transmissive area may have a transmittance ranging from about 5% to about 20%. The transmissive area may include an area overlapping an effective area (e.g., a field of view area) of the first camera module 205 through which light imaged by an image sensor to generate an image passes. For example, the transmissive area of the flexible display 230 may include an area having a lower pixel density and/or a lower wire density than the surrounding area. For example, the above-mentioned opening may replace the transmissive area. For example, some camera modules 205 may include an under-display camera (UDC). In some embodiments, some sensor modules 204 may be disposed to perform the functions thereof in the second space 2201 in the second housing 220 without being visually exposed through the flexible display 230.

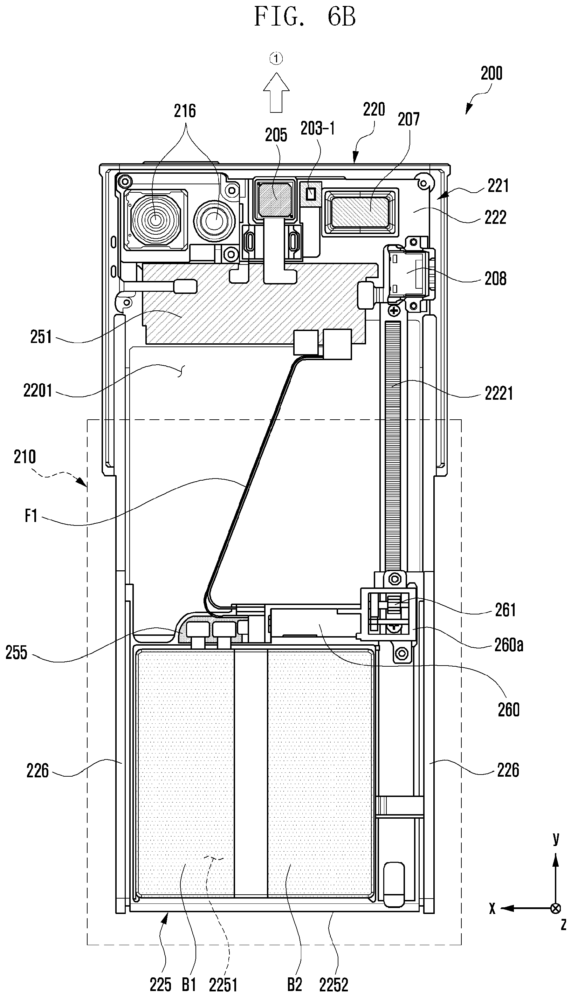

According to various embodiments, the slide-in operation and/or the slide-out operation of the electronic device 200 may be automatically performed. For example, the slide-in operation and/or slide-out operation of the electronic device 200 may be performed through gear engagement between a drive motor (e.g., the drive motor 260 in FIG. 4) including a pinion gear (e.g., the pinion gear 261 in FIG. 4) disposed on a frame cover (e.g., the frame cover 225 in FIG. 4) arranged in the first housing 210, and a rack (e.g., the rack 2221 in FIG. 6B) disposed in a second space 2201 of the second housing 220 and including a rack gear gear-engaged with the pinion gear 261. For example, when detecting a triggering signal of switching from the slide-in state to the slide-out state or from the slide-out state to the slide-in state, the processor (e.g., the processor 120 in FIG. 1) of the electronic device 200 may operate the drive motor (e.g., the drive motor 260 in FIG. 4) disposed inside the electronic device 200. In an embodiment, the triggering signal may include a signal generated by the selection (e.g., touch) of an object displayed on the flexible display 230 or a signal generated by the operation (e.g., pressing) of a physical button (e.g., a key button) included in the electronic device 200.

According to various embodiments, the electronic device 200 has a structure in which the second housing 220 is slid in and/or slid out with respect to the first housing 210 along the length direction of the electronic device 200 (e.g., a vertical direction) (e.g., the ±y-axis direction), but is not limited thereto. For example, the electronic device 200 may have a structure in which the second housing 220 is slid in or slid out with respect to the first housing 210 along the width direction of the electronic device 200 perpendicular to the length direction (e.g., a horizontal direction) (e.g., the ±x-axis direction). In some embodiments, in the electronic device 200, the length of the first side surface 2111 of the first housing 210 may be greater than the length of the second side surface 2112. In this case, correspondingly, the length of the fourth side surface 2211 of the second housing 220 may also be greater than the length of the fifth side surface 2212.

According to various embodiments, the electronic device 200 may include at least one antenna A disposed through at least a portion of the first side surface member 211 made of a conductive material (e.g., metal). In an embodiment, the electronic device 200 may include at least one unit conductive portion 310, 311, or 312 formed through at least one segmentation portion 321 or 322. In an embodiment, the electronic device 200 may include a first conductive portion 310 disposed through the first segmentation portion 321 and the second segmentation portion 322, which are spaced apart at a predetermined interval on a first side surface 2111 of the first side surface member 211. In an embodiment, the electronic device 200 may include a second conductive portion 311 disposed on at least a portion of the first side surface 2111 and a second side surface 2112 through the first segmentation portion 321. In an embodiment, the electronic device 200 may include a third conductive portion 312 disposed on at least a portion of the first side surface 2111 and a third side surface 2113 through the second segmentation portion 322. In an embodiment, at least one of the first conductive portion 310, the second conductive portion 311, or the third conductive portion 312 may be electrically connected to a wireless communication circuit (e.g., the wireless communication module 192 in FIG. 1) of the electronic device 200, and may be used as at least one antenna A operating in at least one predetermined frequency band (e.g., a legacy band or an NR band). For example, the at least one predetermined frequency band may include a range of about 600 MHz to 9000 MHz.

FIG. 4 is an exploded perspective view of an electronic device according to various embodiments of the disclosure.

In describing the electronic device 200 of FIG. 4, components that are substantially the same as those of the electronic device 200 of FIGS. 2A to 3B may be assigned with the same reference numerals, and a detailed description thereof may be omitted.

Referring to FIG. 4, the electronic device 200 may include a first housing 210 including a first space 2101, a second housing 220 that is coupled to be slidable from the first housing 210 and includes a second space 2201, a support member 240 (e.g., a bendable member, multiple bars, or a multi-bar assembly) that is fixed to at least a portion of the second housing 220 and is at least partially bendably accommodated into the first space 2101 according to a slide-in operation, a flexible display 230 that is disposed to be supported by at least a portion of the support member 240 and the second housing 220, and a drive module (e.g., a drive mechanism) that drives the second housing 220 from the first housing 210 in the slide-in direction (e.g., the -y-axis direction) and/or the slide-out direction (e.g., the ±y-axis direction). In an embodiment, the first housing 210 may include a first side surface member 211 and a first rear surface cover 213 coupled to at least a portion of the first side surface member 211. In an embodiment, the first space 2101 may be defined by the coupling of the first side surface member 211 and the first rear surface cover 213. In an embodiment, the second housing 220 may include a second side surface member 221 and a second rear surface cover 223 coupled to at least a portion of the second side surface member 221. In an embodiment, the second space 2201 may be defined by the coupling of the second side surface member 221 and the second rear surface cover 223. According to an embodiment, at least a portion of the second rear surface cover 223 may provide an externally exposed space for a camera module 216 and/or at least one sensor module disposed in the second space 2201 in a slide-in state. According to an embodiment, the electronic device may include a front surface cover 224 coupled to at least a portion of the second housing 220.

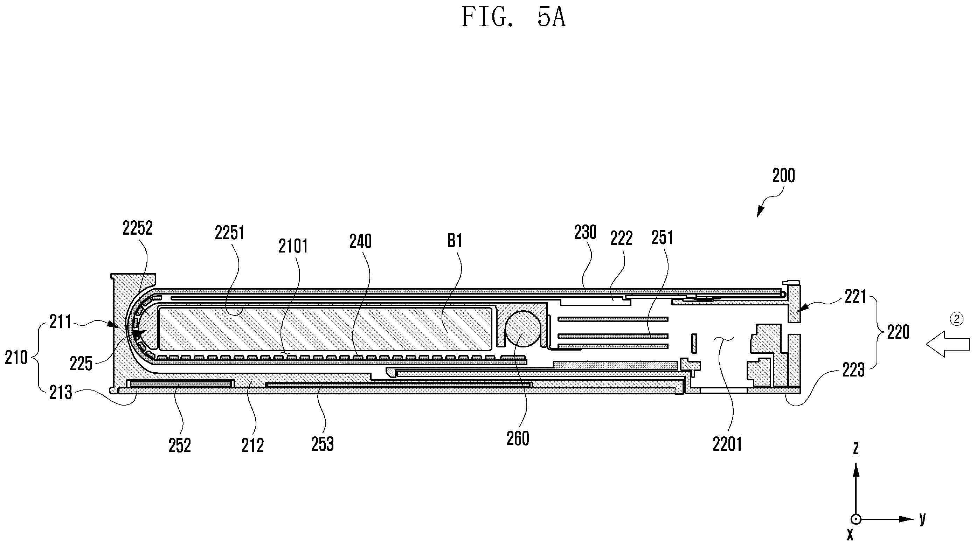

According to various embodiments, the electronic device 200 may include a frame cover 225 fixed in the first space 2101 of the first housing 210. According to an embodiment, the frame cover 225 may include a battery seating portion 2251 (e.g., the battery seating portion 2251 in FIG. 5A) for accommodating at least one battery B1 or B2 and a support portion 2252 provided below the battery seating portion 2251 to support the rear surface of the support member 240 that bends during a sliding operation switching from the slide-out state to the slide-in state In an embodiment, the support portion 2252 may have a curved outer surface to smoothly guide the support member 240. In an embodiment, the electronic device 200 may include a pair of guide rails 226 respectively disposed to both side surfaces of the frame cover 225 to guide both ends of the support member 240 in the sliding direction. In an embodiment, the frame cover 225 may cover at least one battery B1 or B2 or an electronic component such as a drive motor 260 through a finishing cover 214.

According to various embodiments, the guide rail 226 may be made of metal (e.g., aluminum, stainless steel (STS), or magnesium) or a polymer. In an embodiment, the guide rail 226 may include at least one through-hole and/or at least one recess in which a fastening member (e.g., a screw S) may be disposed or fastened.

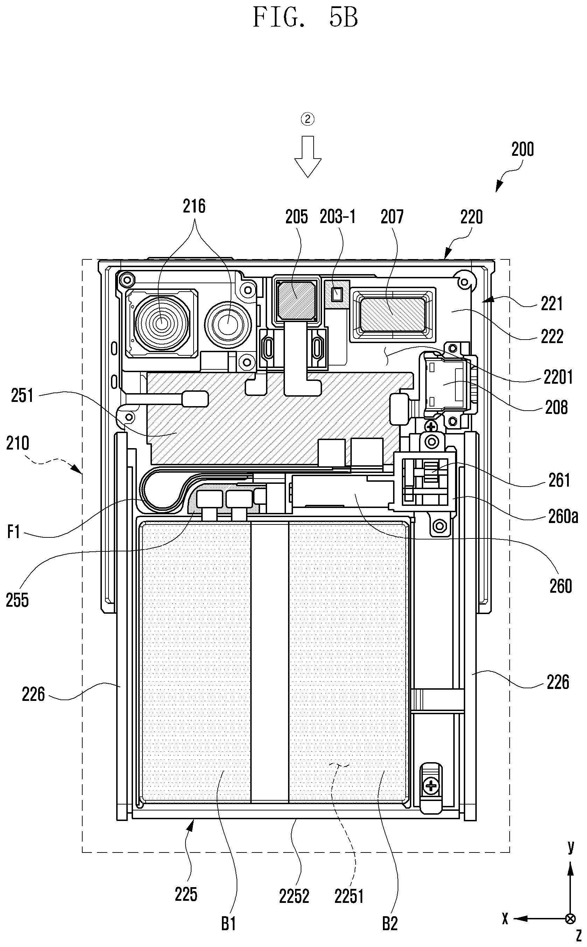

According to various embodiments, a drive module may be disposed in the frame cover 225, and may include a drive motor 260 including a pinion gear 261 and a rack (e.g., the rack 2221 in FIG. 6B) disposed in the second space 2201 of the second housing 220 and including a rack gear disposed to be gear-engaged with the pinion gear 261. In an embodiment, the electronic device 200 may further include a speed reduction module (e.g., a reduction gear assembly) disposed to reduce the rotational speed and increase the driving force by being engaged with the drive motor 260. In an embodiment, the drive motor 260 may be disposed to be supported through a motor bracket (e.g., the motor bracket 260a in FIG. 5B) fixed to the frame cover 225. According to some embodiments, the motor bracket 260a may further include a guide structure that guides the rack 2221 in a sliding direction. Therefore, when the electronic device 200 is assembled, the pinion gear 261 may maintain the state of being gear-coupled with the rack 2221, and the pinion gear 261 receiving the driving force of the drive motor 260 is moved along the rack 2221. As a result, the second housing 220 may be moved with respect to the first housing 210.

According to various embodiments, the electronic device 200 may include at least one electrical component disposed in the second space 2201. In an embodiment, the at least one electrical component may include a board assembly 251 (e.g., a main board, a stacked board, a main PCB, or a first board) and at least one second camera module 216 disposed around the board assembly 251. In an embodiment, the at least one electrical component may include a speaker 207 disposed around the board assembly 251. According to some embodiments, the at least one electrical component may include at least one of a microphone (e.g., the microphone 203-1 in FIG. 2A), a first camera module (e.g., the first camera module 205 in FIG. 2A), a receiver (e.g., the receiver 206 in FIG. 2A), a vibration motor, or a connector port (e.g., the connector port in FIG. 3A). According to some embodiments, the at least one electrical component may be disposed in the first space 2101 of the first housing 210. In an embodiment, since the board assembly 251 is disposed generally centrally in the second space 2201 of the second housing 220, and at least one electrical component is disposed around the board assembly 251, efficient electrical connection between the board assembly 251 and the at least one electrical component may be achieved.

According to an exemplary embodiment of the disclosure, after the frame cover 225 coupled to the second housing 220 is inserted into the first space 2101 of the first housing 210, the frame cover may be fixed to the first housing 210 through fastening members such as screws S that partially penetrate the first housing 210 from the outside. For example, the frame cover 225 may be fixed to the first housing 210 in such a manner that the screws S penetrate the first housing 210 and are then fastened to guide rails 226 fixed to both side surfaces of the frame cover 225. According to an embodiment, the electronic device 200 may include at least one retainer 420 disposed to maintain (e.g., fill or compensate for) a gap between a guide rail 226 and the first housing 210 after the frame cover 225 is coupled to the first housing 210. For example, the at least one retainer 420 may maintain a uniform spacing (e.g., gap) between the guide rail 226 and the first housing 210 when the frame cover 225 is coupled to the first housing 210 through screws S. According to an embodiment, the **at least** one retainer 420 may be disposed in such a manner that, after penetrating a through-hole 410 provided in a side surface of the first housing 210 (e.g., the second side surface 2112 and/or the third side surface 2113), the retainer is received between the guide rail 226 and the first housing 210 through rotation. According to an embodiment, the electronic device 200 may include a side surface plate 430 disposed on a side surface of the first housing 210 (e.g., the second side surface 2112 and/or the third side surface 2113) to cover the through-hole 410 and fixed through a fastening member such as a screw S. For example, the screw S may penetrate the side surface plate 430 and the at least one retainer 420 and then be fastened to the guide rail 226. According to an embodiment, the electronic device 200 may include a cover member 215 disposed to cover the side surface plate 430 so that it is not visible from the outside and to provide an aesthetic exterior appearance of the electronic device 200.

According to an exemplary embodiment of the disclosure, during the process of coupling the frame cover 225 to the first housing 210, the frictional force may be reduced through the gap provided between the guide rail 226 and the first housing 210, thereby helping improve the assemblability of the electronic device 200. According to an embodiment, after the frame cover 225 is coupled to the first housing 210, the at least one retainer 420 may be disposed to maintain the gap, thereby inducing a tight contact between the guide rail 226 and the first housing 210 and helping enhance durability against external impacts such as drops. For example, when a portion of the first housing 210 (e.g., the first side surface member 211) is used as an antenna A, a reliable contact structure between the first housing 210 and the guide rail 226 through the at least one retainer 420 may help maintain the radiation performance of the antenna A.

FIG. 5A is a cross-sectional view of the electronic device according to various embodiments of the disclosure taken along line 5a-5a in FIG. 2A. FIG. 5B is a configuration view of the electronic device according to various embodiments of the disclosure in the slide-in state.

Referring to FIGS. 5A and 5B, the electronic device 200 may include a first housing 210 including a first space 2101 and a second housing 220 slidably coupled to the first housing 210. In an embodiment, the second housing 220 may be disposed to be slid out along a first direction (direction ①) (e.g., the ±y-axis direction) or to be slid in along a second direction (e.g., the -y axis direction) with respect to the first housing 210. In an embodiment, the electronic device 200 may include a support member 240 that is at least partially fixed to the second housing 220 and selectively received in the first space 2101 of the first housing 210 according to movement of the second housing 220. The support member may be disposed to be attached to the rear surface of a flexible display 230. According to an embodiment, the electronic device 200 may include a pair of guide rails 226 respectively fixed to both side surfaces (e.g., the left side surface and the right side surface) of the frame cover 225 to guide both ends of the support member 240.

According to various embodiments, the electronic device 200 may include a frame cover 225 that is slidably coupled to the second housing 220 and fixed in the first space 2101 of the first housing 210. According to an embodiment, the frame cover 225 may include a battery seating portion 2251 configured to accommodating at least one battery B1, and a drive motor 260 disposed around the battery seating portion 2251 and including a pinion gear 261. According to an embodiment, the drive motor 260 may be supported through a motor bracket 260a fixed to the frame cover 225. In some embodiments, the battery seating portion 2251 may be disposed to be supported via a partition wall that at least partially extends from the outer surface of the frame cover 225. According to some embodiments, the at least one battery B1 may be fixed to at least a portion of the frame cover 225 through an adhesive process such as bonding or taping, without a separate partition wall.

According to various embodiments, the electronic device 200 may include a first board 252 (e.g., a sub-board) and an antenna member 253 disposed between the first extension member 212 and the first rear surface cover 213 in the first housing 210. According to an embodiment, the first board 252 and the antenna member 253 may be disposed between the first extension member 212 and the first rear surface cover 213. According to an embodiment, the first board 252 and the antenna member 253 may be electrically connected to a board assembly 251 through a flexible board F1. According to an embodiment, the flexible board F1 may be made of an elastic material or in a shape that expands in the slide-out state and restores to its original position in the slide-in state. According to an embodiment, the flexible board F1 may include a flexible printed circuit board (FPCB) or a flexible RF cable (FRC). In an embodiment, the antenna member 253 may include a multi-function coil or multi-function core (MFC) antenna configured to execute a wireless charging function, a neat field communication (NFC) function, and/or an electronic payment function. In some embodiments, the antenna member 253 may be electrically connected to a second board 255 disposed around the drive motor 260, thereby being electrically connected to the board assembly 251.

According to various embodiments, the electronic device 200 may include multiple electronic components disposed in a second space 2201 of the second housing 220. In an embodiment, the multiple electronic components may be disposed in the second space 2201 of the second housing 220 at positions provided by the second extension member 222. According to an embodiment, the multiple electronic components may include the board assembly 251, and a first camera module 205, a second camera module 216, a speaker 207, and a connector port 208, which are disposed around the board assembly 251. In an embodiment, since the multiple electronic components are disposed around the board assembly 251 in the second space 2201 of the second housing 220, efficient electrical connection may be possible. In an embodiment, the speaker 207 disposed in the second space 2201 may be disposed to emit sound through the second housing 220.

According to various embodiments, in a slide-in state, at least a portion of the second housing 220 may be received in the first housing 210. In an embodiment, at least a portion of the flexible display 230, which is disposed to be supported by the support member 240, may be received in the first space 2101 of the first housing 210 along with the support member 240, so as not to be visible from the outside. In this case, the flexible display 230 may have a first display area.

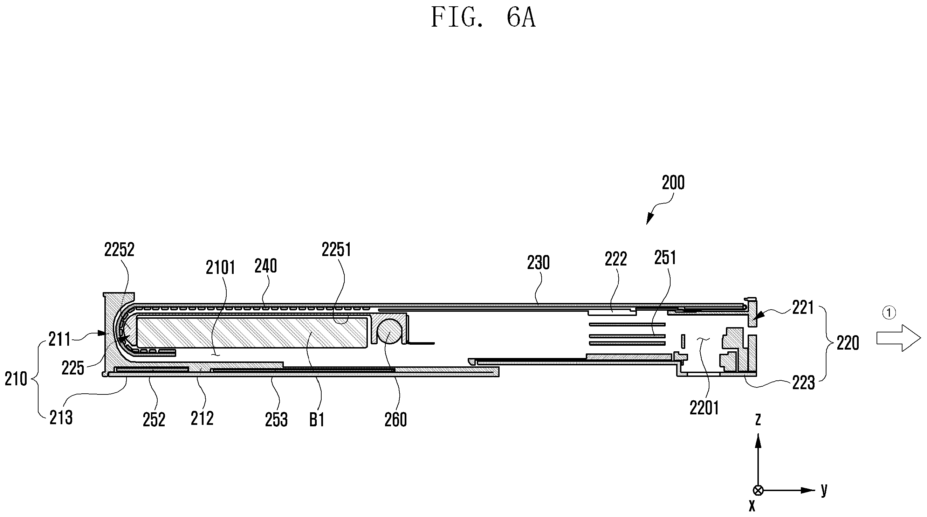

FIG. 6A is a cross-sectional view of the electronic device according to various embodiments of the disclosure taken along line 6a-6a in FIG. 3A. FIG. 6B is a configuration view of the electronic device according to various embodiments of the disclosure in the slide-out state.

Referring to FIGS. 6A and 6B, in the slide-out state, at least a portion of the second housing 220 may be slid out from the first housing 210. According to an embodiment, the drive motor 260 disposed in the frame cover 225 may be driven, and in response to the rotation of the pinion gear 261, the rack 2221 disposed in the second housing 220 may move in the slide-out direction (e.g., direction ①) along with the second housing 220. In this case, at least a portion of a flexible display 230, which is disposed to be supported by the support member 240, may be slid out from the first space 2101 of the first housing 210 along with the support member 240, thereby being disposed to be visible from the outside. In this case, the flexible display 230 may have a display area larger than the first display area.

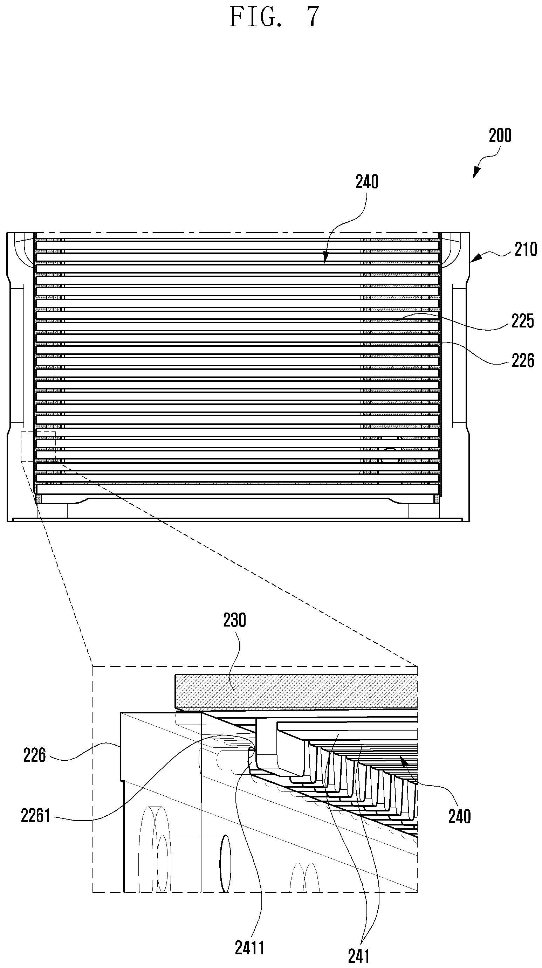

FIG. 7 is a configuration view illustrating a guide structure of guide rails and support members according to various embodiment of the disclosure.

Referring to FIG. 7, the electronic device 200 may include a support member 240 configured to support a flexible display 230 and a pair of guide rails 226 configured to guide both ends of the support member 240. According to an embodiment, the pair of guide rails 226 may be respectively fixed to both side surfaces of the frame cover 225 in the first space 2101 of the first housing 210. According to an embodiment, the support member 240 may include multiple bars 241 rotatably coupled to each other and a guide protrusion 2411 protruding from each of both ends of each of the multiple bars 241. According to an embodiment, the guide rails 226 may be fixed to both side surfaces of the frame cover 225 disposed in the first space 2101 of the first housing 210. According to an embodiment, the guide rails 226 may each include a guide slit 2261 provided at a position corresponding to a movement trajectory of the support member 240. According to an embodiment, when the support member 240 fixed by being attached to the rear surface of the flexible display 230 is movably coupled to the guide rails 226, the guide structure in which the guide protrusions 2411 move along the guide slits 2261 may help reduce a phenomenon in which the flexible display 230 is separated or deformed during operation.

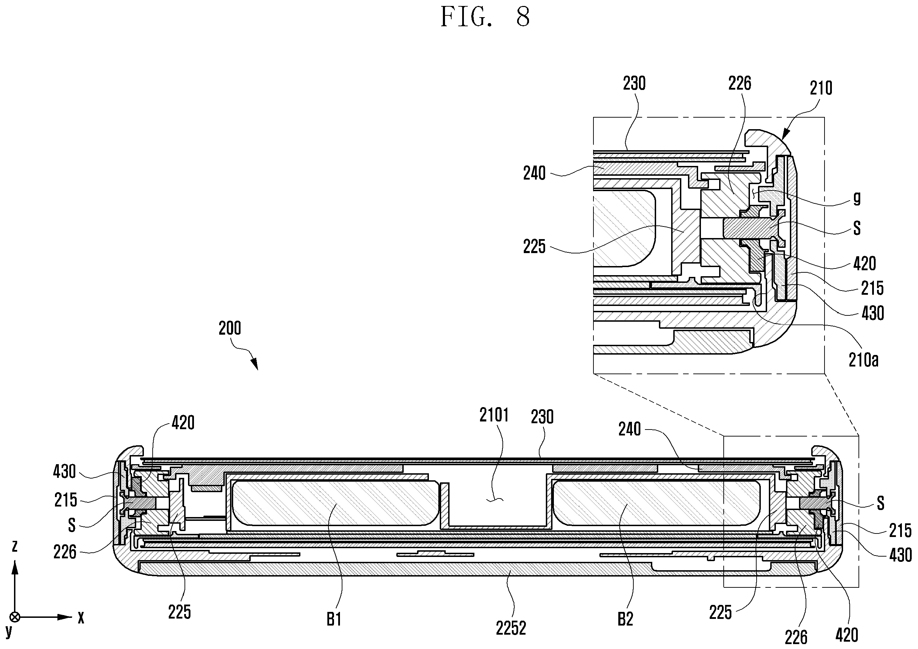

FIG. 8 is a partial cross-sectional view of an electronic device according to various embodiments of the disclosure taken along line 8-8 of FIG. 2A.

Referring to FIG. 8, an electronic device 200 may include a first housing 210 and a second housing 220 slidably coupled to the first housing 210. In an embodiment, the electronic device 200 may include a support member 240 that is at least partially fixed to the second housing 220 and selectively received in the first space 2101 of the first housing 210 according to movement of the second housing 220. The support member may be disposed to be attached to the rear surface of a flexible display 230. In an embodiment, the electronic device 200 may include a frame cover 225 that is slidably coupled to the second housing 220 and then fixed to the first housing 210. According to an embodiment, the electronic device 200 may include a pair of guide rails 226 respectively fixed to both side surfaces (e.g., the left side surface and the right side surface) of the frame cover 225 to guide both ends of the support member 240.

According to various embodiments, the electronic device 200 may include at least one retainer 420 disposed to maintain a gap g between a guide rail 226 and an inner surface 210a of the first housing 210 after the frame cover 225 is coupled to the first housing 210. According to an embodiment, the at least one retainer 420 may be disposed in such a manner that, after penetrating a through-hole (e.g., the through-hole 410 in FIG. 4) provided in a side surface of the first housing 210 (e.g., the second side surface 2112 and/or the third side surface 2113 in FIG. 4), the retainer is received between the guide rail 226 and the first housing 210 through rotation. According to an embodiment, the electronic device 200 may include a side surface plate 430 disposed on a side surface of the first housing 210 (e.g., the second side surface 2112 and/or the third side surface 2113 in FIG. 4) to cover the through-hole 410 and fixed through a fastening member such as a screw S. For example, the screw S may penetrate the side surface plate 430 and the at least one retainer 420 and then be fastened to the guide rail 226. According to an embodiment, the electronic device 200 may include a cover member 215 disposed to cover the side surface plate 430 so that it is not visible from the outside and to provide an aesthetic exterior appearance of the electronic device 200.

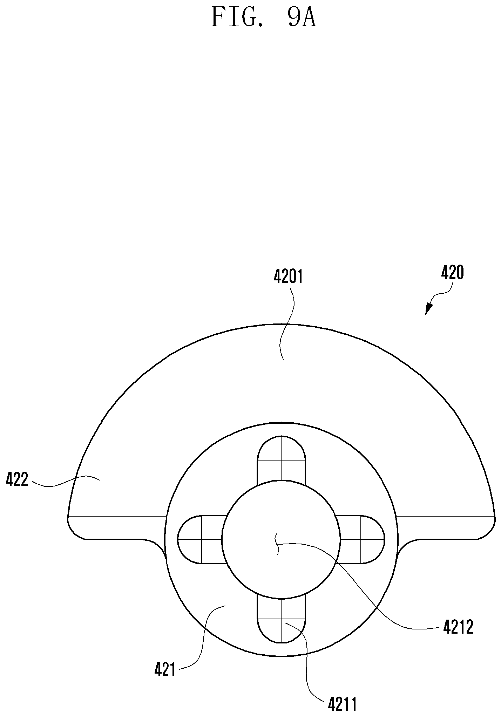

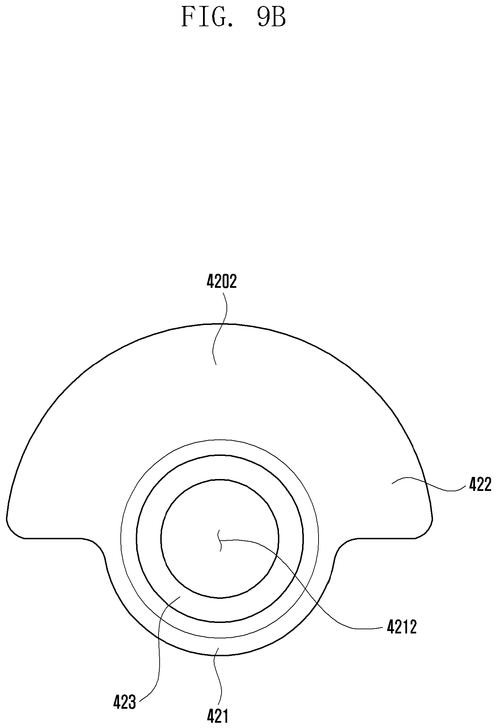

FIGS. 9A to 9C are views illustrating a retainer viewed from various directions, according to various embodiments of the disclosure.

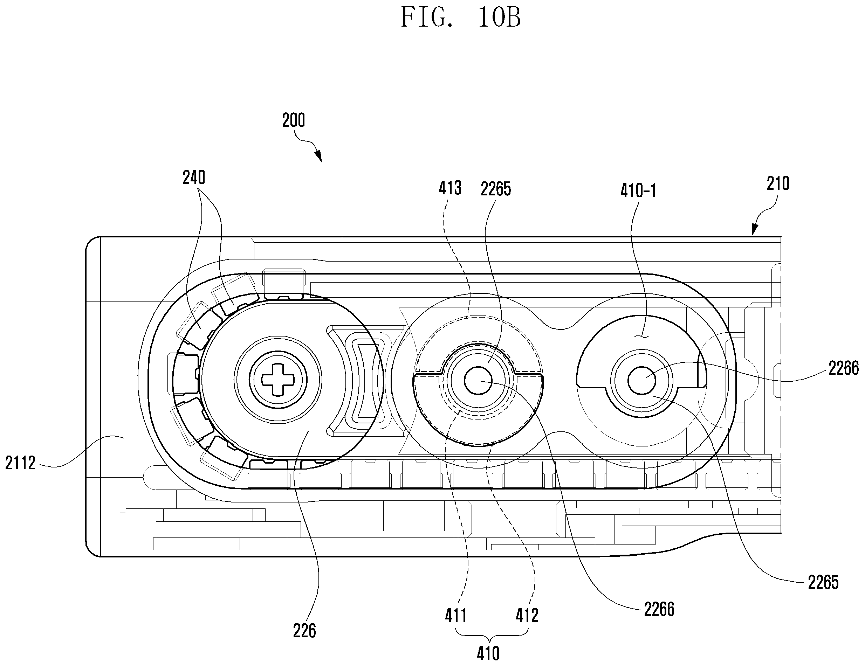

Referring to FIGS. 8 to 9C, the retainer 420 may include a circular body portion 421 having a first screw through-hole 4212 at the center and a plate portion 422 extending from the outer circumferential surface of the body portion 421 in a predetermined shape. In an embodiment, the plate portion 422 may extend radially from the body portion 421 along the outer circumferential surface at a predetermined angle. In an embodiment, the plate portion 422 may be configured in a fan shape of a semicircle having a concentric center with the body portion 421. According to some embodiments, the plate portion 422 may be configured in a fan shape having an acute angle or an obtuse angle rather than a semicircular shape. According to an embodiment, the thickness t of the plate portion 422 may be equal to or slightly greater than the gap g between the guide rail 226 and an inner surface 210a of the first housing 210. According to an embodiment, the plate portion 422 may include a first surface 4201 that comes into contact with the inner surface 210a of the first housing 210 and a second surface 4202 that comes into contact with the guide rail 226. According to an embodiment, the retainer 420 may include a tool operation groove 4211 provided in the body portion 421 in a direction in which the first surface 4201 is oriented, and an assembly boss 423 protruding from the body portion 421 in a direction in which the second surface 4202 is oriented. According to an embodiment, the tool operation groove 4211 may provide operational convenience for rotating the retainer 420 using a tool after the retainer 420 is inserted into a through-hole (e.g., the through-hole 410 in FIG. 4) of the first housing 210. According to an embodiment, the assembly boss 423 may be configured in a shape to be seated in a circular stepped portion 2265 (e.g., the stepped portion 2265 in FIG. 10B) provided around a screw fastening groove (e.g., the screw fastening groove 2266 in FIG. 10B) of the guide rail 226, and may help align the position of the retainer 420 that is temporarily assembled to the guide rail 226. According to an embodiment, the retainer 420 may be made of metal or polymer.

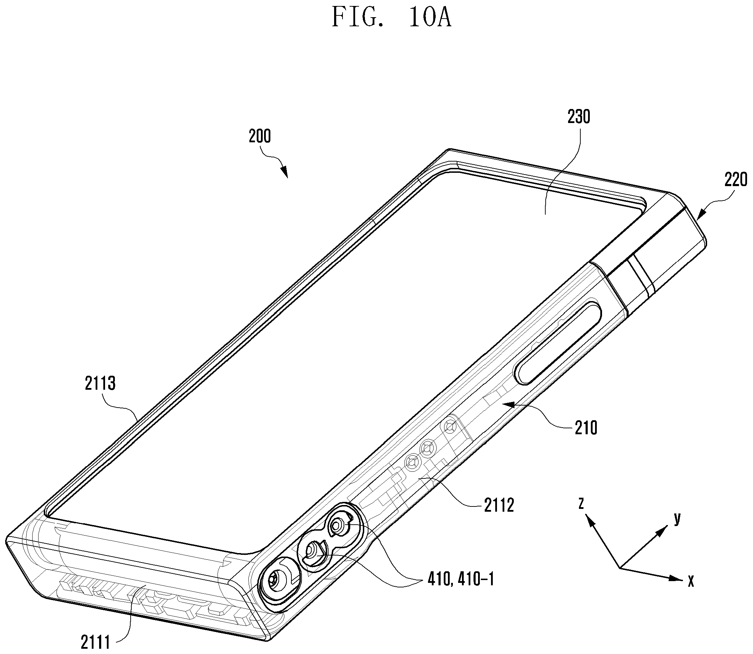

FIG. 10A is a perspective view of an electronic device including through-holes according to various embodiments of the disclosure. FIG. 10B is an enlarged view of an area including through-holes of a first housing according to various embodiments of the disclosure.

Referring to FIGS. 10A and 10B, the electronic device 200 may include a first housing 210 and a second housing 220 slidably coupled to the first housing 210. In an embodiment, the electronic device 200 may include a frame cover 225 that is slidably coupled to the second housing 220 and then fixed to the first housing 210. According to an embodiment, the electronic device 200 may include a pair of guide rails 226 respectively fixed to both side surfaces (e.g., the left side surface and the right side surface) of the frame cover 225 to guide both ends of the support member 240.

According to various embodiments, the electronic device 200 may include one or more through-holes 410 and 410-1 formed through a side surface 2112 of the first housing 210. According to an embodiment, the one or more through-holes 410 and 410-1 may be provided in the second side surface 2112 and/or the third side surface 2113. According to an embodiment, the one or more through-holes 410 and 410-1 may be provided in a recess that is lower than the side surface of the first housing 210. According to an embodiment, the one or more through-holes 410 and 410-1 may include a first through-hole 410 and a second through-hole 410-1 that are arranged adjacent to each other. According to an embodiment, the one or more through-holes 410 and 410-1 may be a single hole or three or more holes. In an embodiment, the first through-hole 410 may have the same shape as the second through-hole 410-1 and may be symmetrical to each other in the z-axis direction. In some embodiments, the first through-hole 410 and the second through-hole 410-1 may have the same arrangement. In some embodiments, the first through-hole 410 and the second through-hole 410-1 may be symmetrical to each other in the ±y-axis direction. For convenience of description, the shape of the first through-hole 410 (hereinafter referred to as a "through-hole") is described below. However, it is apparent that the second through-hole 410-1 may also have the same configuration.

According to various embodiments, a guide rail 226 may be disposed around the through-hole 410. Accordingly, at least a portion of the guide rail 226 may be disposed to be visible from the outside through the through-hole 410. In an embodiment, the through-hole 410 may be provided in substantially the same shape as the retainer 420. In an embodiment, the through-hole 410 may include a first through region 411 provided in a shape corresponding to a body portion 421 of the retainer 420 and a second through region 412 extending from the first through region 411 in a shape corresponding to a plate portion 422 of the retainer 420. For example, the second through region 412 may be provided in a fan shape of a semicircle along the edge of the circular first through region 411. Accordingly, the first housing 210 may include a blocked non-through portion 413 around the first through region 411. In an embodiment, the non-through portion 413 may be brought into contact with the plate portion 422 to prevent the retainer 420 from escaping outward from the through-hole 410 when the retainer 420 is rotated after being inserted through the through-hole 410. In an embodiment, the stepped portion 2265 and the screw fastening groove 2266 of the guide rail 226 may be disposed at a position overlapping the first through region 411 when the second side surface 2112 is viewed from the outside (e.g., when viewed in the -x-axis direction), so that when the retainer 420 is inserted through the through-hole 410, the boss 423 of the body portion 421 and the first screw through-hole 4212 may correspond to facilitate assembly.

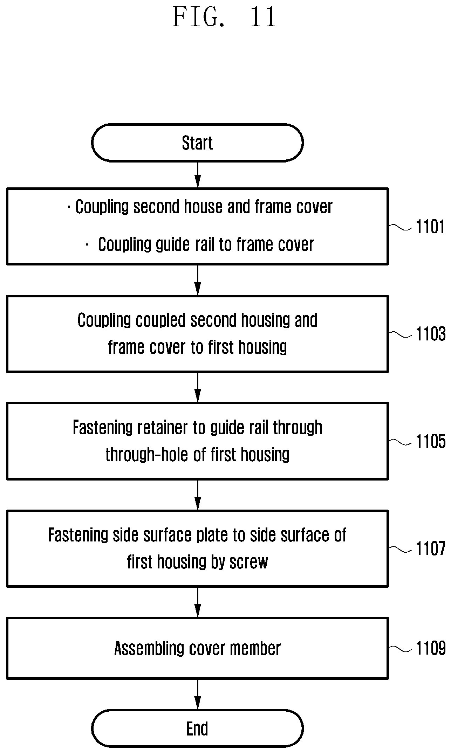

FIG. 11 is a process view illustrating an assembly process of an electronic device according to various embodiments of the disclosure.

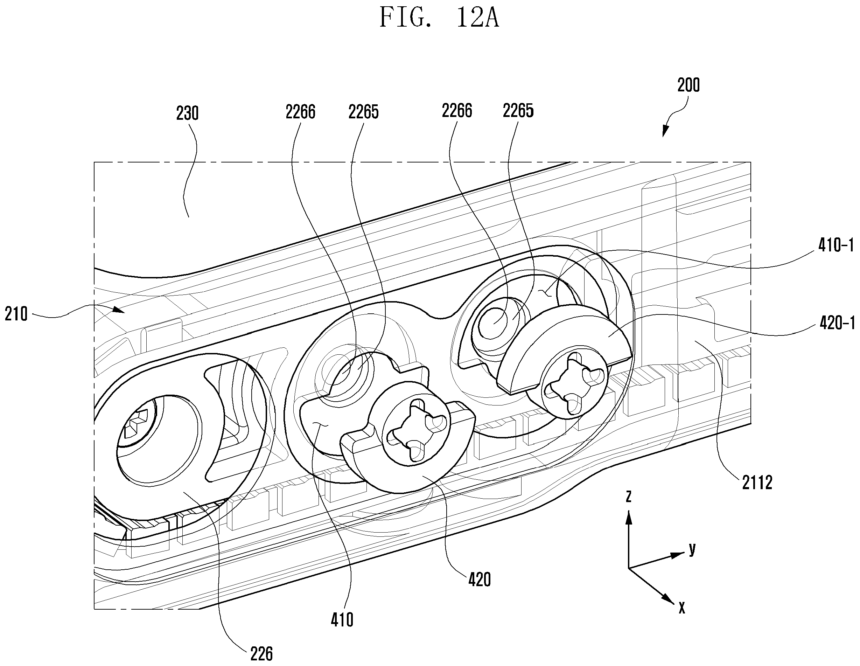

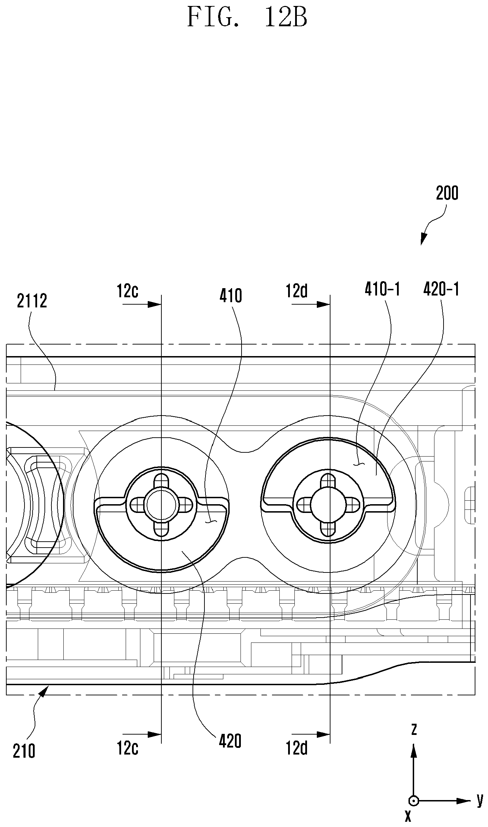

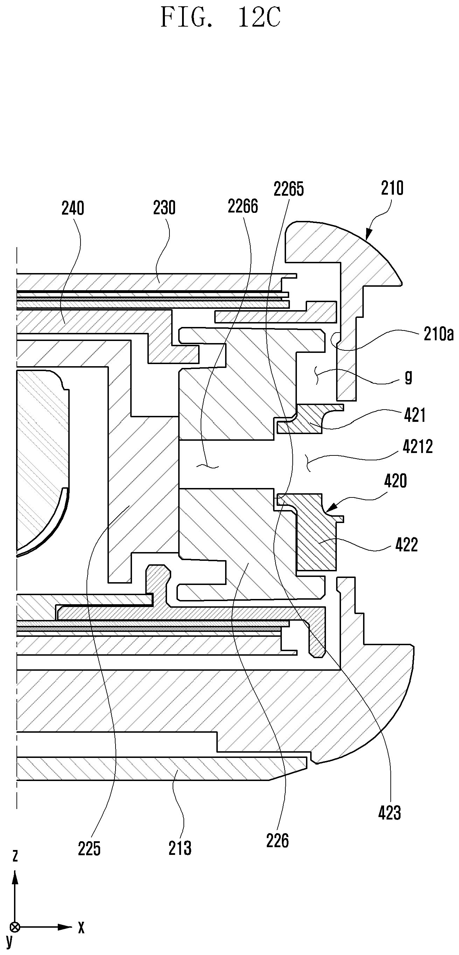

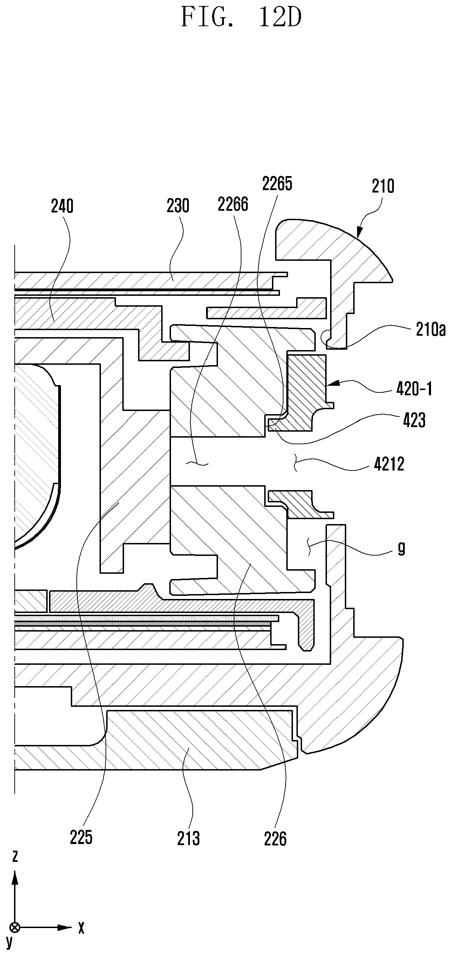

FIG. 12A is a partial perspective view of an electronic device illustrating a state in which retainers are inserted through through-holes, according to various embodiments of the disclosure. FIG. 12B is a partial side view of an electronic device illustrating a state in which the retainers are inserted through the through-holes, according to various embodiments of the disclosure. FIG. 12C is a partial cross-sectional view of the electronic device taken along line 12c-12c in FIG. 12B, according to various embodiments of the disclosure. FIG. 12D is a partial cross-sectional view of an electronic device as viewed along line 12D-12D of FIG. 12B, according to various embodiments of the disclosure.

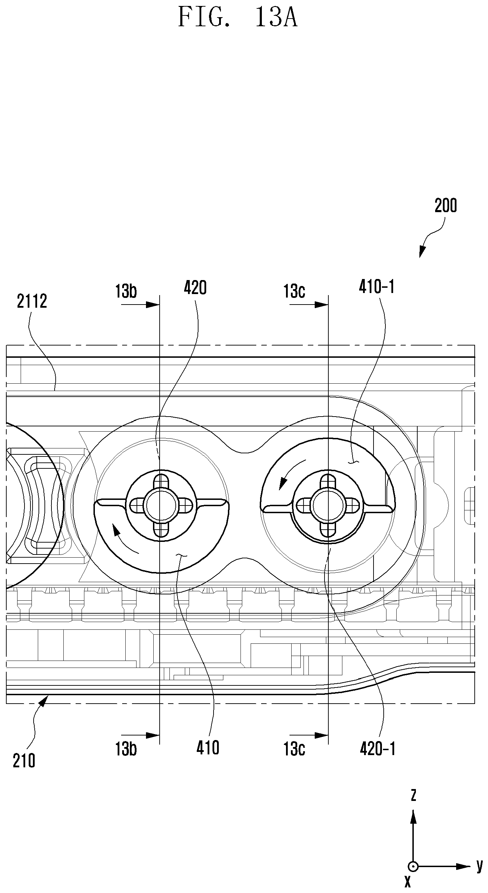

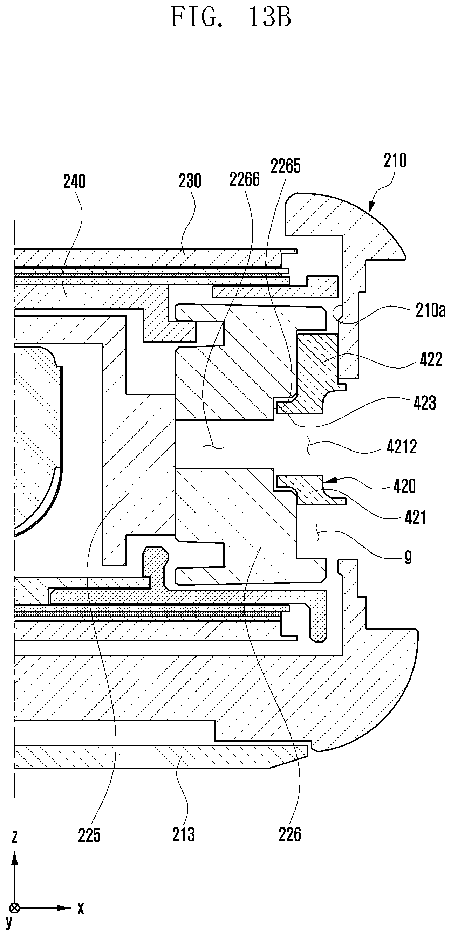

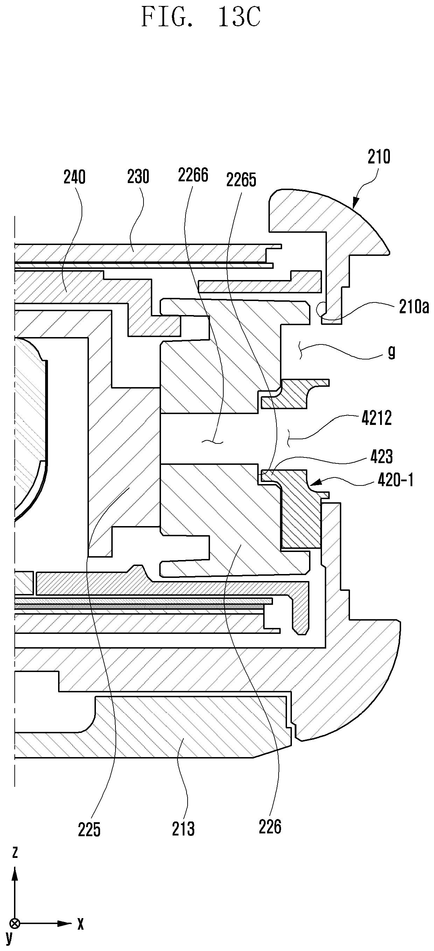

FIG. 13A is a partial side view of the electronic device illustrating a state in which the retainer inserted through through-holes are rotated, according to various embodiments of the disclosure. FIG. 13B is a partial cross-sectional view of the electronic device taken along line 13b-13b in FIG. 13A, according to various embodiments of the disclosure. FIG. 13C is a partial cross-sectional view of the electronic device taken along line 13c-13c in FIG. 13A, according to various embodiments of the disclosure.

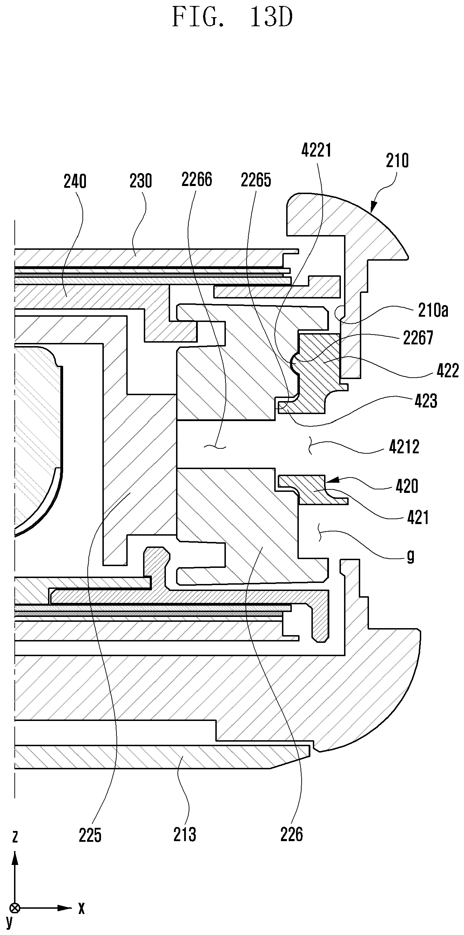

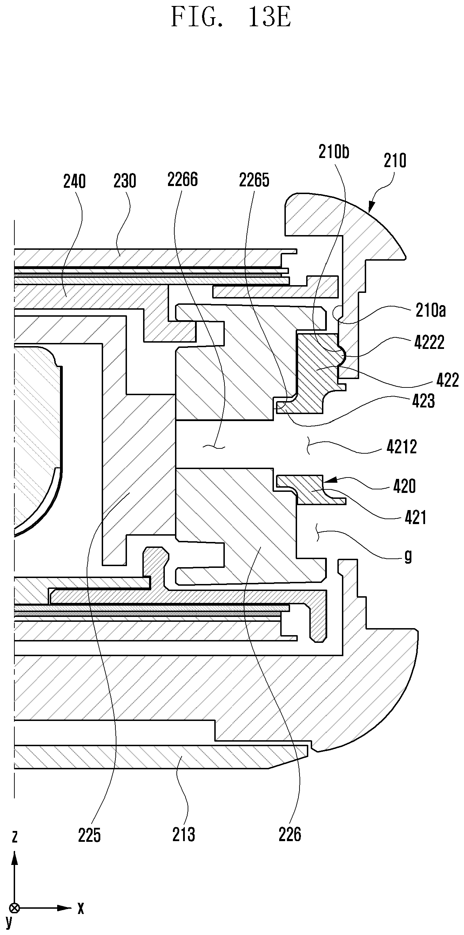

FIGS. 13D and 13E are partial cross-sectional views of the electronic device illustrating a state in which a retainer inserted through a through-hole is rotated, according to various embodiments of the disclosure.

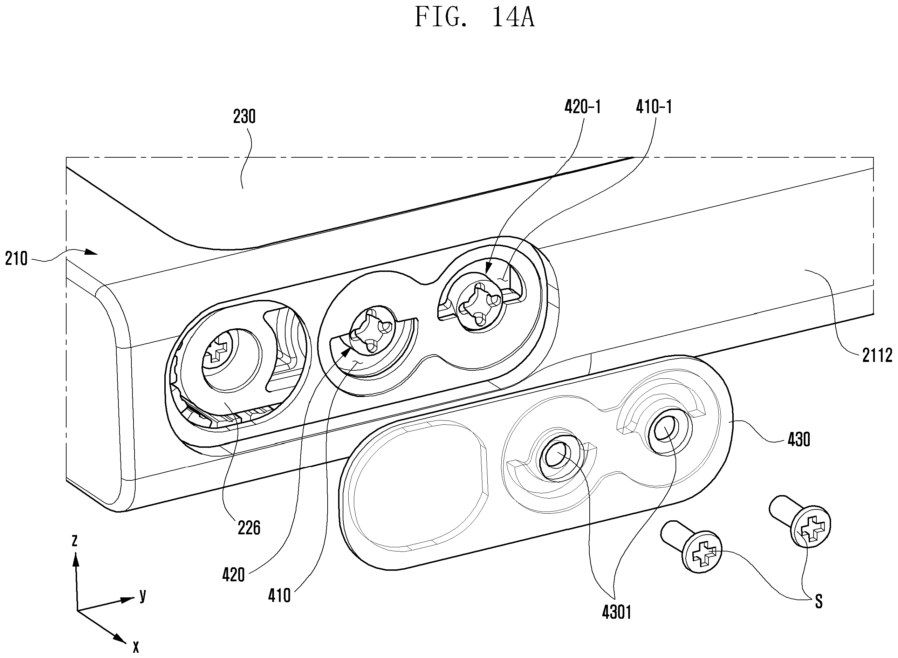

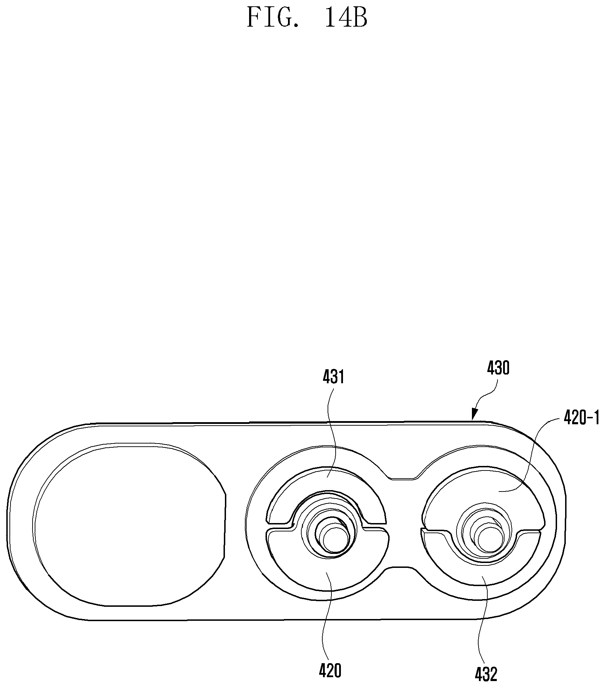

FIG. 14A is a partial perspective view of the electronic device illustrating a state in which a side surface plate is coupled to a side surface of the electronic device according to various embodiments of the disclosure. FIG. 14B is a perspective view of a side surface plate including a flow prevention protrusion, according to various embodiments of the disclosure.

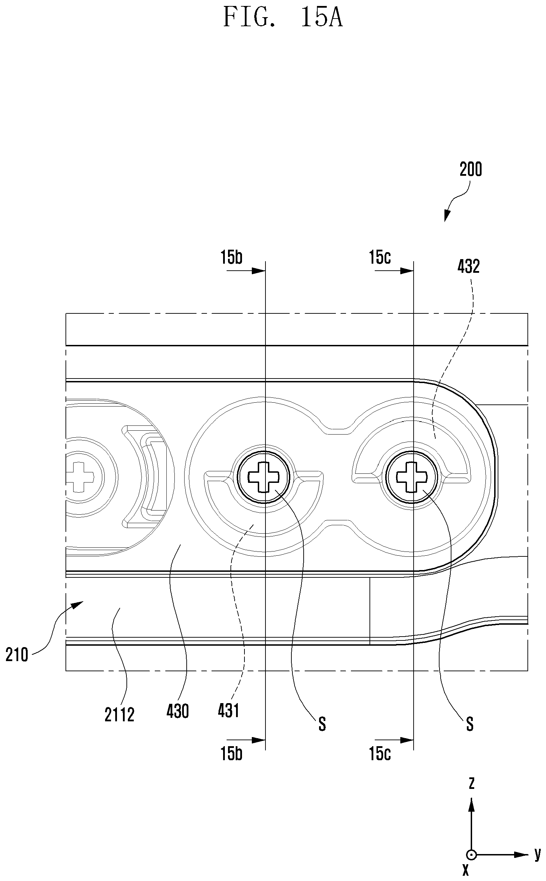

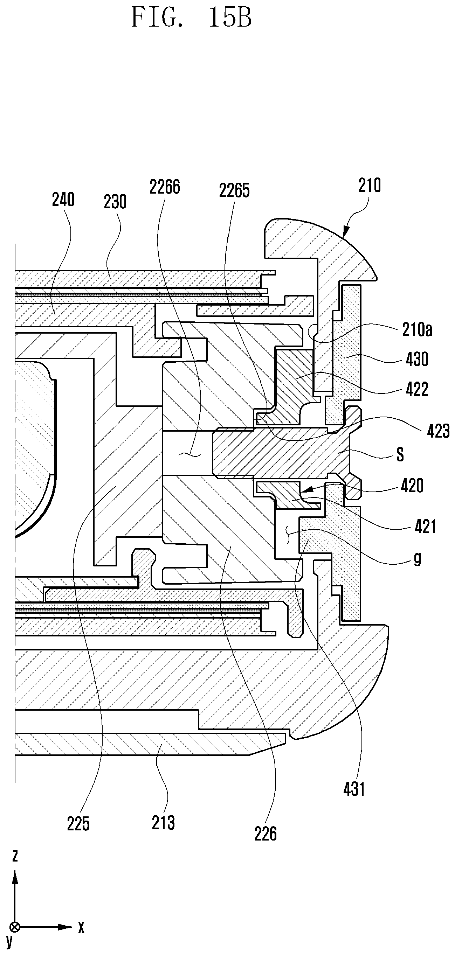

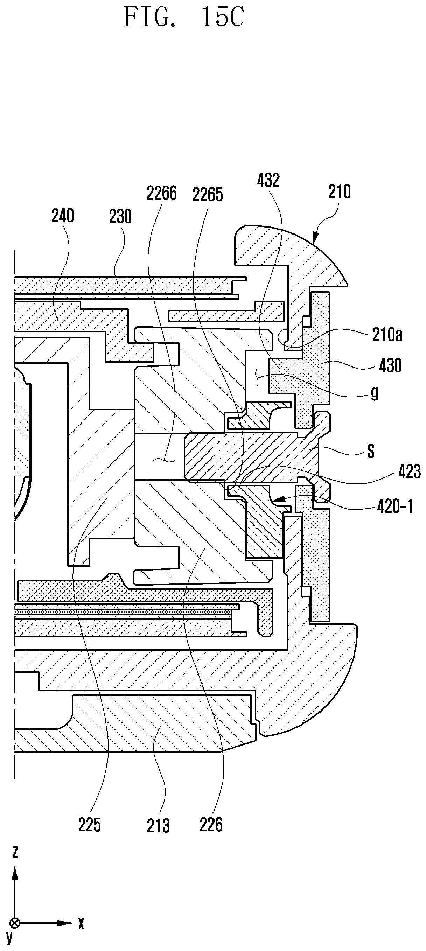

FIG. 15A is a partial side view of an electronic device illustrating a state in which the side surface plate is fixed by screws, according to various embodiments of the disclosure. FIG. 15B is a partial cross-sectional view of the electronic device taken along line 15B-15B of FIG. 15A, according to various embodiments of the disclosure. FIG. 15C is a partial cross-sectional view of the electronic device taken along line 15c-15c in FIG. 15A, according to various embodiments of the disclosure.

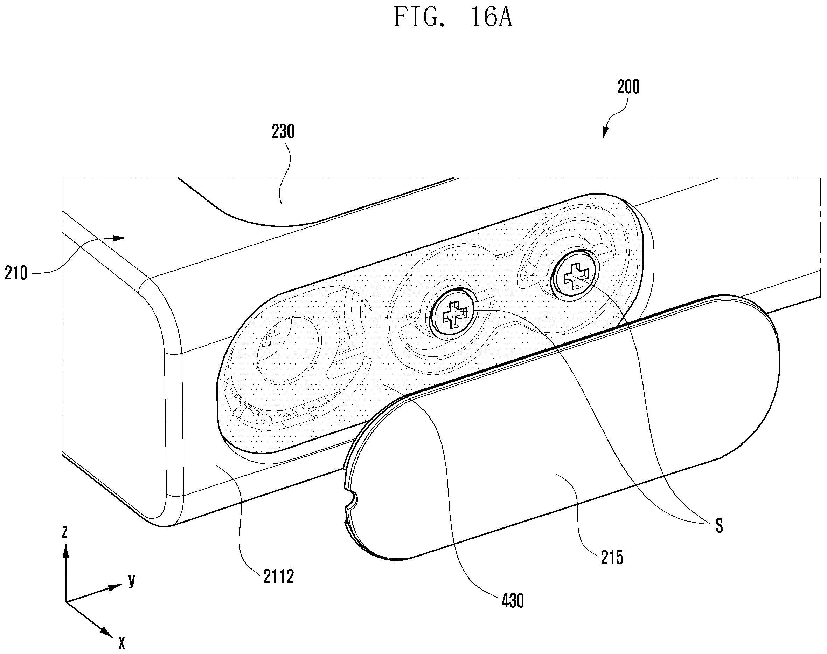

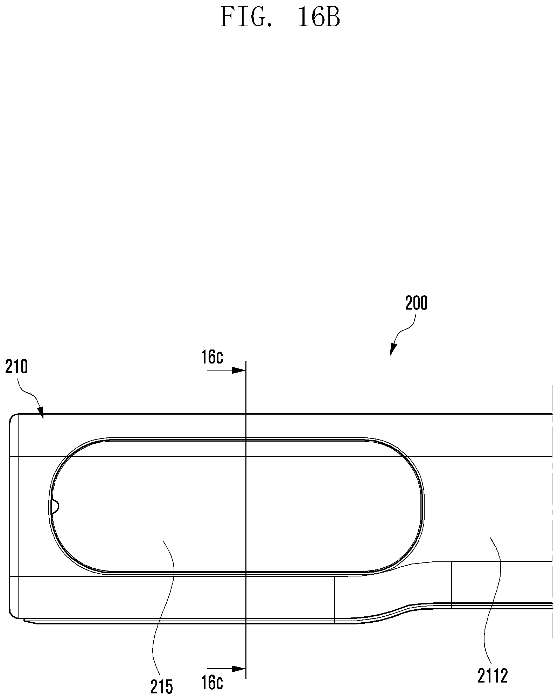

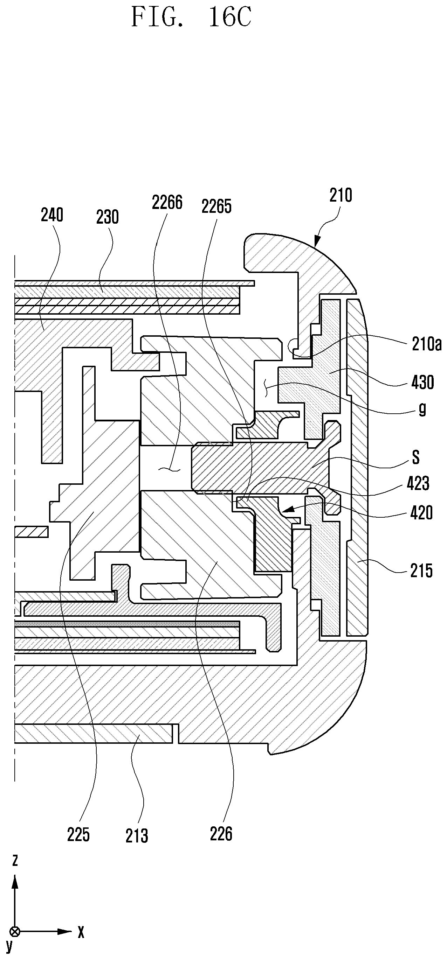

FIGS. 16A and 16B are views illustrating a partial side surface of the electronic device in which a cover member is coupled, according to various embodiments of the disclosure. FIG. 16C is a partial cross-sectional view of the electronic device taken along line 16C-16C of FIG. 16B, according to various embodiments of the disclosure.

In describing the electronic devices 200 of FIGS. 12A to 16C, the same reference numerals are assigned to substantially the same components, and detailed descriptions thereof may be omitted.

Referring to FIG. 11, in operation 1101, as illustrated in FIG. 4, the second housing 220 and the frame cover 225 are coupled, and the guide rails 226 may be coupled to the frame cover 225. In an embodiment, the frame cover 225 may be slidably coupled to the second housing 220. In an embodiment, the guide rails 226 may be fixed to the left and right side surfaces of the frame cover 225 by screws S. In an embodiment, the flexible display 230 may be coupled such that both ends of the support member 240 attached to the rear surface thereof are guided by the guide rails 226.

In operation 1103, as illustrated in FIG. 8, the second housing 220 and the frame cover 225 may be coupled to the first housing 210. In this case, the second housing 220 and the frame cover 225 may be in a temporarily assembled state with the first housing 210. In an embodiment, gaps g formed between the guide rails 226 fixed to the frame cover 225 and the first housing 210 may help improve the assemblability of the second housing 220 and the frame cover 225.

Thereafter, in operation 1105, as illustrated in FIGS. 12A to 12D, the retainers 420 may be fastened to guide rails 226 through the through-holes 410 of the first housing 210. In an embodiment, at least a portion (e.g., the plate portion 422) of each of the retainers 420 inserted through the through-holes 410 may maintain the gaps g between the guide rails 226 and the inner surface 210a of the first housing 210. In an embodiment, after the retainers 420 is inserted through the through-holes 410 and mounted to the guide rails 226, the bosses 423 provided on the body portions 421 of the retainers 420 may be at least partially seated in the stepped portions 2265 (e.g., recesses) provided in the guide rails 226, thereby preventing the retainers 420 from arbitrarily moving before the screws S are fastened. In this case, the first screw through-holes 4212 of the retainer 420 may remain aligned with the screw fastening grooves 2266 of the guide rails 226.

As illustrated in FIGS. 13A to 13C, after being inserted through the through-holes 410 and temporally assembled to the guide rails 226, the retainers 420 may be rotated using a tool applied to the tool operation grooves 4211. In this case, the plate portions 422 of the retainers 420 may be positioned to maintain the gaps g between the guide rails 226 and the inner surface 210a of the first housing 210. For example, when the first retainers 420 inserted into the first through-holes 410 are rotated, the plate portions 422 may move in the z-axis direction and maintain the gaps g between the guide rails 226 and the inner surface 210a of the first housing 210. In an embodiment, when the second retainers 420-1 inserted into the second through-holes 410-1 are rotated, the plate portions 422 may move in the -z-axis direction and maintain the gaps g between the guide rails 226 and the inner surface 210a of the first housing 210.

According to an exemplary embodiment of the disclosure, the plate portions 422 of the rotated retainers 420 and 420-1 may have their temporarily assembled positions fixed through a fastening structure.

Referring to FIG. 13D, the retainer 420 may include at least one locking protrusion 4221 protruding from the plate portion 422 toward the guide rail 226 (e.g., in the -x-axis direction). In an embodiment, after the plate portion 422 of the retainer 420 is rotated to maintain the gap g, the guide rail 226 may include at least one locking groove 2267 provided at a position corresponding to the at least one locking protrusion 4221. In an embodiment, when the retainer 420 is assembled to the guide rail 226 and rotated, the at least one locking protrusion 4221 of the plate portion 422 may be tightly fitted into the at least one locking groove 2267 with a coupling structure such as an interference fit, thereby helping maintain the rotated position of the retainer 420 until the screw fastening is completed.

Referring to FIG. 13E, each of the retainers 420 may include at least one locking protrusion 4222 protruding from the plate portion 422 toward the first housing 210 (e.g., in the x-axis direction). In an embodiment, the first housing 210 may include at least one locking groove 210b provided at a position on the inner surface 210a to correspond to at least one locking protrusion 4222 after the plate portion 422 of the retainer 420 is rotated to maintain the gap g. In an embodiment, when the retainer 420 is assembled to the guide rail 226 and rotated, the at least one locking protrusion 4222 of the plate portion 422 may be tightly fitted into the at least one locking groove 210b with a coupling structure such as an interference fit, thereby helping maintain the rotated position of the retainer 420 until the screw fastening is completed.

Thereafter, in operation 1107, as illustrated in FIGS. 14A to 15C, a side surface plate 430 may be fastened to the side surface of the first housing 210 by screws S. In an embodiment, the side surface plate 430 may include second screw through-holes 4301 provided at position corresponding to the first screw through-holes 4212 of the retainers 420 inserted through the through-holes 410. In an embodiment, the side surface plate 430 may include protrusions 431 and 432 to fill the through-holes 410 after the retainers 420 are rotated. For example, the side surface plate 430 may include a first protrusion 431 to prevent the rotation of the first retainer 420 and a second protrusion 432 to prevent the rotation of the second retainer 420-1. In an embodiment, the first protrusion 431 and the second protrusion 432 may have the same shape but may be arranged at positions symmetrical or opposite to each other so as to correspond to the arrangement positions of the first through-hole 410 and the second through-hole 410-1. Accordingly, after the side surface plate 430 is coupled to the side surface of the first housing 210 and fastened by the screws S, the protrusions 431 and 432 protruding from the side surface plate 430 may be inserted into the through-holes 410 and 410-1, thereby helping prevent the retainers 420 and 420-1 from being arbitrarily rotated or displaced. In an embodiment, the side surface plate 430 may be made of metal or polymer.

Thereafter, in operation 1109, as illustrated in FIGS. 16A to 16C, a cover member 215 may be coupled to the side surface of the first housing 210. For example, the cover member 215 may be fixed in a manner that aligns with the side surface of the first housing 210. In an embodiment, the cover member 215 may be made of a material and in a shape that matches the side surface of the first housing 210. In an embodiment, the cover member 215 may help form an aesthetic exterior of the electronic device 200 by covering the side surface plate 430 and the screws S that are fastened to the guide rail 226 after penetrating through the side surface plate 430 and the retainers 420, thereby preventing the screws S from being visible from the outside. In an embodiment, the cover member 215 may be fixed to the first housing 210 through bonding, taping, or structural coupling.

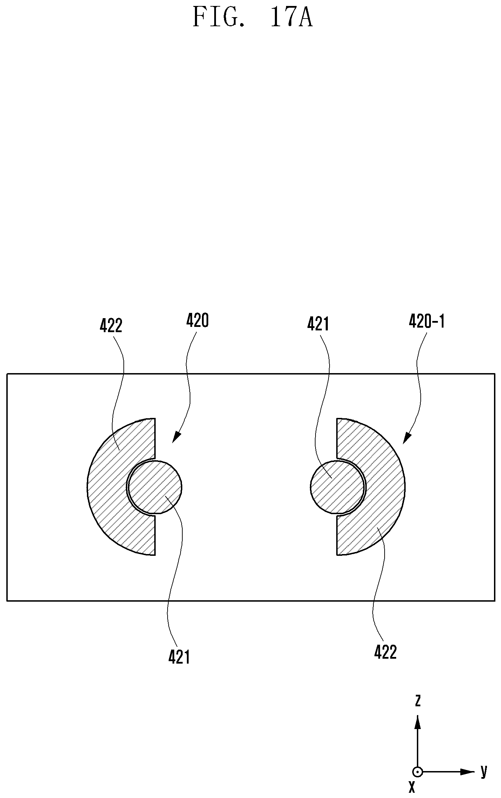

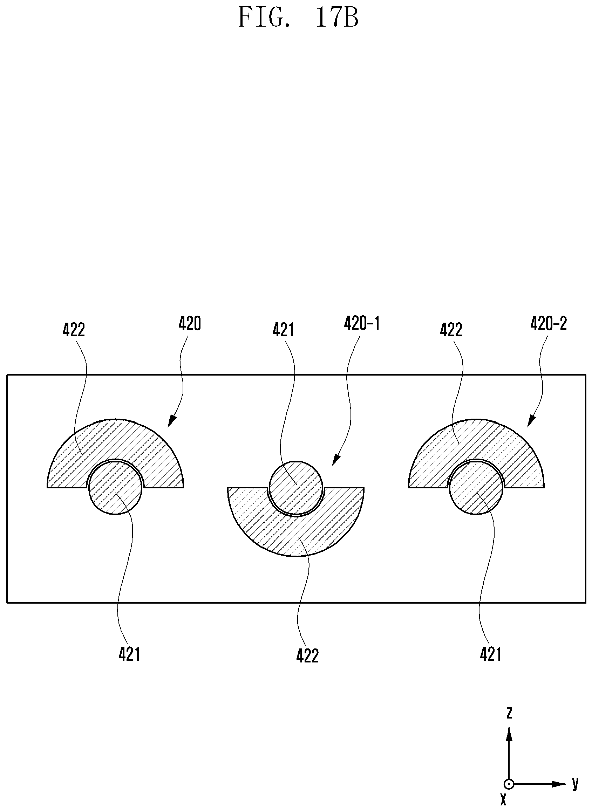

FIGS. 17A and 17B are schematic views illustrating the arrangement structure of retainers after rotation, according to various embodiments of the disclosure.

Referring to FIG. 17A, the retainers 420 and 420-1 may include a first retainer 420 and a second retainer 420-1 arranged at a predetermined interval from the first retainer 420. In an embodiment, the first retainer 420 and the second retainer 420-1 may each include a body portion 421 and a plate portion 422 extending from the body portion 421, which, after rotation, is positioned to maintain the gap g between the guide rail 226 and the inner surface 210a of the first housing 210. In an embodiment, the first plate portion 422 of the first retainer 420 and the second plate portion 422 of the second retainer 420-1 may be arranged symmetrically outward along the ±y-axis direction. In some embodiments, the first plate portion 422 of the first retainer 420 and the second plate portion 422 of the second retainer 420-1 may be arranged symmetrically inward along the ±y-axis direction.

Referring to FIG. 17B, the retainers 420, 420-1, and 420-2 may include a first retainer 420, a second retainer 420-1 arranged at a predetermined interval from the first retainer 420, and a third retainer 420-2 arranged at a predetermined interval from the second retainer 420-1. In an embodiment, the first retainer 420, the second retainer 420-1, and the third retainer 420-2 may each include a body portion 421 and a plate portion 422 extending from the body portion 421, which, after rotation, is positioned to maintain the gap g between the guide rail 226 and the inner surface 210a of the first housing 210. In an embodiment, the first plate portion 422 of the first retainer 420, the second plate portion 422 of the second retainer 420-1, and the third plate portion 422 of the third retainer 420-2 may be alternately arranged along the z-axis direction such that they are positioned in opposite directions relative to each other.

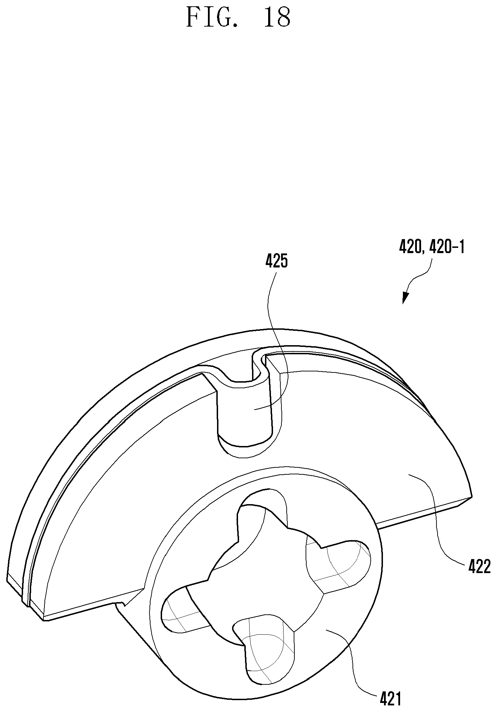

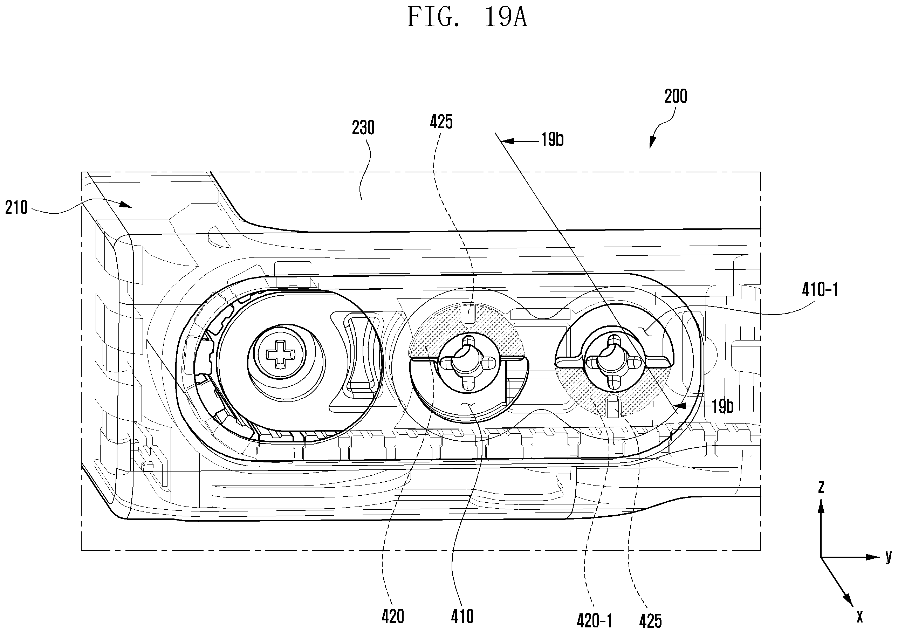

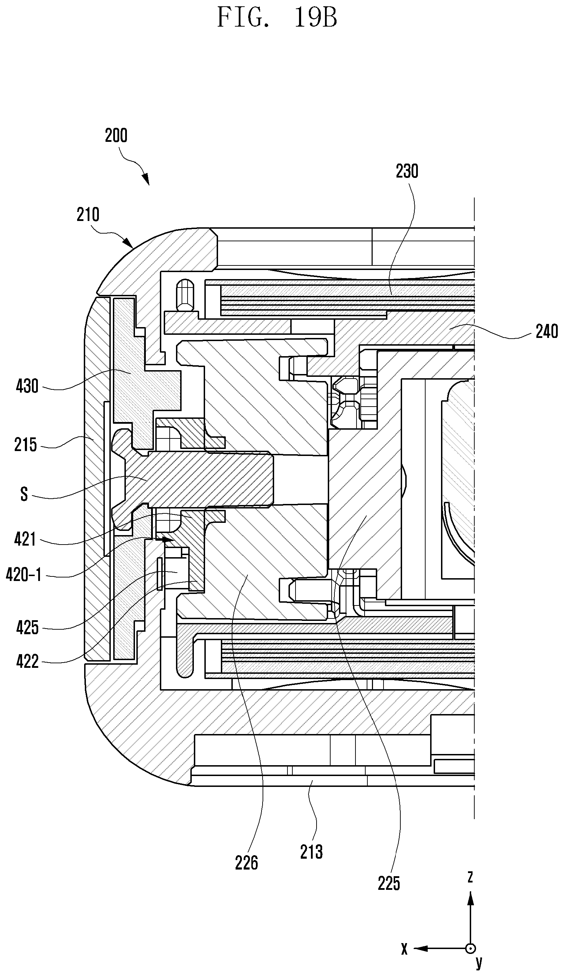

FIG. 18 is a perspective view of a retainer including a contact spring according to various embodiments of the disclosure. FIG. 19A is a perspective view illustrating a portion of a side surface of an electronic device in which the retainers of FIG. 18 are assembled, according to various embodiments of the disclosure. FIG. 19B is a partial cross-sectional view of the electronic device taken along line 19b-19b in FIG. 19A, according to various embodiments of the disclosure.

Referring to FIGS. 18A to 19B, the retainers 420 and 420-1 may each include a body portion 421 and a plate portion 422 extending from the body portion 421. In an embodiment, the retainers 420 and 420-1 may be made of a metal material and may each include a contact spring 425 disposed to protrude from the plate portion 422 in the direction of the guide rail 226. In an embodiment, when at least a portion of the first housing 210 is used as an antenna (e.g., the antenna A in FIG. 2A) made of a conductive material, the first housing 210 and the guide rail 226, which is made of a conductive material (e.g., metal), may be electrically connected through contact via the screws S and/or the retainers 420 and 420-1, thereby serving as a grounding structure for the antenna A. For example, as illustrated in FIG. 4, when the first conductive portion 310 disposed on the first side surface 2111 is used as the antenna A, the third conductive portion 312 of the third side surface 2113, which is made of a conductive material, may affect the radiation performance of the antenna A1. Accordingly, the third conductive portion 312 needs to be electrically connected to a ground (GND) of the electronic device 200. In an embodiment, the guide rails 226, which are made of a conductive material, may be electrically connected by coming into contact with the frame cover 225, which is also made of a conductive material (e.g., metal). In this case, the contact springs 425 disposed on the retainers 420 and 420-1 may be in tight contact with the plate portions 422 of the retainers 420 and 420-1 with elasticity, thereby helping improve contact reliability for the electrical connection (e.g., grounding connection) between the first housing 210 and the guide rails 226.

According to various embodiments, an electronic device (e.g., the electronic device 200 in FIG. 4) may include a first housing (e.g., the first housing 210 in FIG. 4), a second housing (e.g., the second housing 220 in FIG. 4) slidably coupled to the first housing, a frame cover (e.g., the frame cover 225 in FIG. 4) disposed inside the first housing, and at least one retainer (e.g., the retainers 420 in FIG. 4) positioned to face a side surface of the frame cover through at least one through-hole (e.g., the through-holes 410 illustrated in FIG. 4) provided in a side surface of the first housing. After penetrating through the through-hole, the retainer may maintain a gap (e.g., the gap g illustrated in FIG. 8) between the frame cover and an inner surface (e.g., the inner surface 210a in FIG. 8) of the first housing through rotation.

According to various embodiments, the frame cover may include guide rails (e.g., the guide rails 226 illustrated in FIG. 4) respectively fixed to both side surfaces, and the retainer may be fixed to at least a portion of the guide rails.

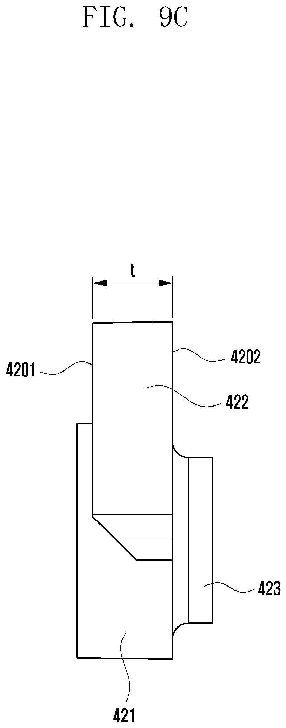

According to various embodiments, the at least one retainer may include a circular body portion (e.g., the body portion 421 in FIG. 9C) and a plate portion (e.g., the plate portion 422 in FIG. 9C) extending at least partially from an outer circumferential surface of the body portion, and a thickness (e.g., the thickness t in FIG. 9C) of the plate portion may be equal to or greater than the gap.

According to various embodiments, the plate portion may extend in a sector shape from the outer circumferential surface of the body portion.

According to various embodiments, the plate portion may extend in a semicircular shape from the body portion.

According to various embodiments, the retainer may include a circular boss (e.g., the boss 423 illustrated in FIG. 9C) protruding from the body portion toward a guide rail, and the boss may be rotatably seated in a circular step portion (e.g., the step portion 2265 in FIG. 12C) provided in the guide rail.

According to various embodiments, the plate portion may include at least one locking protrusion (e.g., the locking protrusion 4221 in FIG. 13D) protruding toward the guide rail, and the locking protrusion may be locked into at least one locking groove (e.g., the locking groove 2267 in FIG. 13D) formed at a corresponding position of the guide rail to maintain a rotated position of the retainer.

According to various embodiments, the plate portion may include at least one locking protrusion (e.g., the locking protrusion 4222 in FIG. 13E) protruding toward the inner surface of the first housing, and the locking protrusion may be locked into at least one locking groove (e.g., the locking groove 210b in FIG. 13E) provided at a corresponding position on the inner surface of the first housing to maintain a rotated position of the retainer.

According to various embodiments, the plate portion may include at least one contact spring 425 (e.g., the contact spring 425 in FIG. 18) protruding toward the guide rail, and the plate portion may be electrically connected to the guide rail through the contact spring.

According to various embodiments, the at least one retainer may include two or more retainers disposed at a predetermined interval, and the two or more retainers may be disposed in the first housing along the sliding direction.

According to various embodiments, the two or more retainers may be positioned such that the directions in which the respective plate portions are oriented differ from each other after rotation.

According to various embodiments, the electronic device may include a side surface plate (e.g., the side surface plate 430 in FIG. 4) disposed on a side surface of the first housing and fastened to the guide rail together with the retainer through a fastening member S (e.g., the screw S in FIG. 4), and the side surface plate may include one or more protrusion (e.g., the protrusions 431 and 432 in FIG. 14B) protruding toward the guide rail. The protrusions may be inserted into the at least one through-hole to prevent rotation of the retainer.

According to various embodiments, at least a portion of the first housing may include a conductive portion for use as an antenna, and the retainer may be made of a conductive material to electrically connect the conductive portion and the frame cover. The frame cover may be made of a conductive material.

According to various embodiments, the electronic device may include a support member (e.g., the support member 240 in FIG. 4) having one end fixed to the second housing and selectively received inside the first housing so as not to be visible according to movement of the second housing, and a flexible display 230 (e.g., the flexible display 230 in FIG. 4) fixed to the support member and attached to the second housing.

According to various embodiments, both ends 2411 (e.g., the guide protrusions 2411 in FIG. 7) of the support member may be coupled to move along guide slits 2261 (e.g., the guide slits 2261 in FIG. 7) formed in the guide rails.

According to various embodiments, the electronic device may include a cover member (e.g., the cover member 215 in FIG. 4) disposed in the first housing and covering the at least one through-hole so as not to be visible from the outside.

According to various embodiments, an electronic device (e.g., the electronic device 200 in FIG. 4) may include a first housing (e.g., the first housing 210 in FIG. 4), a second housing (e.g., the second housing 220 in FIG. 4) coupled to slide from the first housing, a support member (e.g., the support members 240 in FIG. 4) having one end fixed to the second housing and selectively received inside the first housing so as not to be visible according to movement of the second housing, a flexible display (e.g., the flexible display 230 in FIG. 4) disposed to be supported by the support member and the second housing, a frame cover (e.g., the frame cover 225 in FIG. 4) disposed inside the first housing, guide rails (e.g., the guide rails 226 in FIG. 4) respectively fixed to both side surfaces of the frame cover, at least one retainer (e.g., the retainers 420 in FIG. 4) positioned to face at least a portion of the guide rail through at least one through-hole (e.g., the through-holes 410 in FIG. 4) provided in a side surface of the first housing, and a side surface plate (e.g., the side surface plates 430 in FIG. 4) disposed on the side surface of the first housing and fastened to the guide rail together with the retainer through a fastening member (e.g., the screws S in FIG. 4). After penetrating through the through-hole, the retainer may maintain a gap (e.g., the gap g in FIG. 8) between the guide rail and an inner surface (e.g., the inner surface 210a in FIG. 8) of the first housing through rotation.

According to various embodiments, the at least one retainer may include a circular body portion and a plate portion extending at least partially from the outer circumferential surface of the body portion, and the thickness of the plate portion may be equal to or greater than the gap.

According to various embodiments, the plate portion may extend in a sector shape from the outer circumferential surface of the body portion.

According to various embodiments, the retainer may include a circular boss protruding from the body portion toward the guide rail, and the boss may be rotatably seated in a circular step portion provided in the guide rail.

The embodiments of the disclosure disclosed in this specification and drawings are provided merely to propose specific examples in order to easily describe the technical features according to the embodiments of the disclosure and to help understanding of the embodiments of the disclosure, and are not intended to limit the scope of the embodiments of the disclosure. Accordingly, the scope of various embodiments of the disclosure is to be construed as including all changes or modifications derived based on the technical idea of the various embodiments of the disclosure in addition to the embodiments disclosed herein.

## Claims

1. An electronic device (200) comprising:
a first housing (210) including at least one through-hole (410) formed on a side surface thereof;
a second housing (220) slidably coupled relative to the first housing (210);
a frame cover (225) disposed in the first housing, wherein a side surface of the frame cover (225) faces the side surface of the first housing (210);
a guide rail (226) fixed to the side surface of the frame cover (225) and positioned between the first housing and the frame cover;
**characterised by**
at least one retainer (420) configured to penetrate the at least one through-hole (410) of the first housing (210) and rotatably couple to the guide rail (226) while positioned between the guide rail (226) and an inner surface (210a) of the first housing (210); and,
a side surface plate (430) disposed on the side surface of the first housing (210) and fixed to the guide rail (226) together with the at least one retainer,
wherein the at least one retainer is configured to maintain a predetermined gap, g, between the frame cover (225) and an inner surface (210a) of the first housing (210).

2. The electronic device of claim 1, wherein the side surface plate is disposed on the side surface of the first housing and fastened to a the guide rail together with the retainer through at least a fastening member.

3. The electronic device of claim 2, wherein the at least one retainer comprises:
a circular body portion (421); and
a plate portion (422) extending at least partially from an outer circumferential surface of the body portion, and
wherein the plate portion has a thickness (t) equal to or greater than the gap.

4. The electronic device of claim 3, wherein the plate portion extends in a sector shape from the outer circumferential surface of the body portion.

5. The electronic device of claim 3, wherein the plate portion extends in a semicircular shape from the body portion.

6. The electronic device of claim 2, wherein the electronic device comprises a circular boss (423) protruding from the body portion toward the guide rail, and
wherein the boss is rotatably seated in a circular step portion (2265) formed in the guide rail.

7. The electronic device of claim 3, wherein the plate portion comprises at least one locking protrusion (4221) protruding therefrom in a direction of the guide rail, and
wherein the locking protrusion is configured to be locked into at least one locking groove (2267) provided at a corresponding position of the guide rail to maintain a rotated position of the retainer.

8. The electronic device of claim 3, wherein the plate portion comprises at least one locking protrusion (4222) protruding therefrom toward the inner surface of the first housing, and
wherein the locking protrusion is configured to be locked into at least one locking groove (210b) provided at a corresponding position of the inner surface of the first housing to maintain a rotated position of the retainer.

9. The electronic device of claim 3, wherein the plate portion comprises at least one contact spring (425) protruding therefrom toward
the guide rail, and
wherein the plate portion is electrically connected to the guide rail through at least the contact spring.

10. The electronic device of claim 3, wherein at least one retainer comprises two or more retainers arranged at a predetermined interval, and
wherein the two or more retainers are disposed in the first housing along the sliding direction.

11. The electronic device of claim 10, wherein the two or more retainers are positioned such that directions in which respective plate portions are oriented differ from each other after rotation.

12. The electronic device of claim 1, wherein the side surface plate comprises at least one protrusion (431, 432) protruding toward the guide rail, and
wherein the protrusion is configured to be inserted into the at least one through-hole to prevent and/or reduce rotation of the retainer.

13. The electronic device of claim 1, wherein at least a portion of the first housing comprises a conductive portion to be used as an antenna, and
wherein the retainer comprises a conductive material to electrically connect the conductive portion and the frame cover, the frame cover also comprising conductive material.

14. The electronic device of claim 2, further comprising:
a support member (240) having one end fixed to the second housing and configured to be selectively received in the first housing so as not to be visible according to movement of the second housing; and
a flexible display (230) fixed to the support member and attached to the second housing.

15. The electronic device of claim 14, wherein both ends (2411) of the support member are coupled to move along guide slits (2261) formed in the guide rail.

## Patentansprüche

1. Elektronische Vorrichtung (200), umfassend:
ein erstes Gehäuse (210) mit mindestens einem Durchgangsloch (410), das auf einer Seitenfläche davon gebildet ist;
ein zweites Gehäuse (220), das relativ zu dem ersten Gehäuse (210) verschiebbar gekoppelt ist;
eine Rahmenabdeckung (225), die in dem ersten Gehäuse angeordnet ist, wobei eine Seitenfläche der Rahmenabdeckung (225) der Seitenfläche des ersten Gehäuses (210) zugewandt ist;
eine Führungsschiene (226), die an der Seitenfläche der Rahmenabdeckung (225) befestigt und zwischen dem ersten Gehäuse und der Rahmenabdeckung positioniert ist;
**gekennzeichnet durch**
mindestens einen Halter (420), der dazu konfiguriert ist, das mindestens eine Durchgangsloch (410) des ersten Gehäuses (210) zu durchdringen und drehbar an die Führungsschiene (226) zu koppeln, während zwischen der Führungsschiene (226) und einer Innenfläche (210a) des ersten Gehäuses (210) positioniert; und
eine Seitenflächenplatte (430), die auf der Seitenfläche des ersten Gehäuses (210) angeordnet und an der Führungsschiene (226) zusammen mit dem mindestens einen Halter befestigt ist,
wobei der mindestens eine Halter dazu konfiguriert ist, einen vorbestimmten Spalt, g, zwischen der Rahmenabdeckung (225) und einer Innenfläche (210a) des ersten Gehäuses (210) aufrechtzuerhalten.

2. Elektronische Vorrichtung nach Anspruch 1, wobei die Seitenflächenplatte auf der Seitenfläche des ersten Gehäuses angeordnet und an einer Führungsschiene zusammen mit dem Halter durch mindestens ein Befestigungselement befestigt ist.

3. Elektronische Vorrichtung nach Anspruch 2, wobei der mindestens eine Halter Folgendes umfasst:
einen kreisförmigen Körperabschnitt (421); und
einen Plattenabschnitt (422), der sich mindestens teilweise von einer Außenumfangsfläche des Körperabschnitts erstreckt, und
wobei der Plattenabschnitt eine Dicke (t) aufweist, die gleich dem oder größer als der Spalt ist.

4. Elektronische Vorrichtung nach Anspruch 3, wobei sich der Plattenabschnitt in einer Sektorform von der Außenumfangsfläche des Körperabschnitts erstreckt.

5. Elektronische Vorrichtung nach Anspruch 3, wobei sich der Plattenabschnitt in einer halbkreisförmigen Form von dem Körperabschnitt erstreckt.

6. Elektronische Vorrichtung nach Anspruch 2, wobei die elektronische Vorrichtung eine kreisförmige Erhebung (423) umfasst, die von dem Körperabschnitt hin zu der Führungsschiene vorsteht, und
wobei die Erhebung in einem kreisförmigen Stufenabschnitt (2265), der in der Führungsschiene gebildet ist, drehbar gelagert ist.

7. Elektronische Vorrichtung nach Anspruch 3, wobei der Plattenabschnitt mindestens einen Verriegelungsvorsprung (4221) umfasst, der davon in einer Richtung der Führungsschiene vorsteht, und
wobei der Verriegelungsvorsprung dazu konfiguriert ist, in mindestens eine Verriegelungsnut (2267) hinein verriegelt zu werden, die an einer entsprechenden Position der Führungsschiene vorgesehen ist, um eine gedrehte Position des Halters beizubehalten.

8. Elektronische Vorrichtung nach Anspruch 3, wobei der Plattenabschnitt mindestens einen Verriegelungsvorsprung (4222) umfasst, der davon hin zu der Innenfläche des ersten Gehäuses vorsteht, und
wobei der Verriegelungsvorsprung dazu konfiguriert ist, in mindestens eine Verriegelungsnut (210b) hinein verriegelt zu werden, die an einer entsprechenden Position der Innenfläche des ersten Gehäuses vorgesehen ist, um eine gedrehte Position des Halters aufrechtzuerhalten.

9. Elektronische Vorrichtung nach Anspruch 3, wobei der Plattenabschnitt mindestens eine Kontaktfeder (425) umfasst, die davon hin zu der Führungsschiene vorsteht, und
wobei der Plattenabschnitt elektrisch mit der Führungsschiene durch mindestens die Kontaktfeder verbunden ist.

10. Elektronische Vorrichtung nach Anspruch 3, wobei mindestens ein Halter zwei oder mehr Halter umfasst, die in einem vorbestimmten Intervall angeordnet sind, und
wobei die zwei oder mehr Halter in dem ersten Gehäuse entlang der Gleitrichtung angeordnet sind.

11. Elektronische Vorrichtung nach Anspruch 10, wobei die zwei oder mehr Halter so positioniert sind, dass sich Richtungen, in denen jeweilige Plattenabschnitte orientiert sind, nach einer Drehung voneinander unterscheiden.

12. Elektronische Vorrichtung nach Anspruch 1, wobei die Seitenflächenplatte mindestens einen Vorsprung (431, 432) umfasst, der hin zu der Führungsschiene vorsteht, und
wobei der Vorsprung dazu konfiguriert ist, in das mindestens eine Durchgangsloch eingeführt zu werden, um eine Drehung des Halters zu verhindern und/oder zu reduzieren.

13. Elektronische Vorrichtung nach Anspruch 1, wobei mindestens eine Abschnitt des ersten Gehäuses einen leitenden Abschnitt umfasst, der als Antenne zu verwenden ist, und
wobei der Halter ein leitendes Material umfasst, um den leitenden Abschnitt und die Rahmenabdeckung elektrisch zu verbinden, wobei die Rahmenabdeckung ebenfalls leitendes Material umfasst.

14. Elektronische Vorrichtung nach Anspruch 2, ferner umfassend:
ein Stützelement (240) mit einem Ende, das an dem zweiten Gehäuse befestigt ist, und das dazu konfiguriert ist, selektiv in dem ersten Gehäuse aufgenommen zu werden, um so gemäß einer Bewegung des zweiten Gehäuses nicht sichtbar zu sein; und
eine flexible Anzeige (230), die an dem Stützelement befestigt und an dem zweiten Gehäuse angebracht ist.

15. Elektronische Vorrichtung nach Anspruch 14, wobei beide Enden (2411) des Stützelements gekoppelt sind, um sich Führungsschlitze (2261), die in der Führungsschiene gebildet sind, entlang zu bewegen.

## Revendications

1. Dispositif électronique (200) comprenant :
un premier boîtier (210) comprenant au moins un trou traversant (410) formé sur une surface latérale de celui-ci ;
un second boîtier (220) couplé coulissant par rapport au premier boîtier (210) ;
un couvercle de cadre (225) disposé dans le premier boîtier, une surface latérale du couvercle de cadre (225) faisant face à la surface latérale du premier boîtier (210) ;
un rail de guidage (226) fixé à la surface latérale du couvercle de cadre (225) et positionné entre le premier boîtier et le couvercle du cadre ;
**caractérisé par**
au moins un dispositif de retenue (420) conçu pour pénétrer dans l'au moins un trou traversant (410) du premier boîtier (210) et se coupler de manière à pouvoir tourner au rail de guidage (226) pendant qu'il est positionné entre le rail de guidage (226) et une surface interne (210a) du premier boîtier (210) ; et,
une plaque de surface latérale (430) disposée sur la surface latérale du premier boîtier (210) et fixée au rail de guidage (226) avec l'au moins un dispositif de retenue,
ledit au moins un dispositif de retenue étant conçu pour maintenir un espace prédéfini, g, entre le couvercle de cadre (225) et une surface interne (210a) du premier boîtier (210).

2. Dispositif électronique de la revendication 1, ladite plaque de surface latérale étant disposée sur la surface latérale du premier boîtier et fixée au rail de guidage avec le dispositif de retenue par l'intermédiaire d'au moins un élément de fixation.

3. Dispositif électronique de la revendication 2, ledit au moins un dispositif de retenue comprenant :
une partie corps circulaire (421) ; et
une partie plaque (422) s'étendant au moins partiellement à partir d'une surface circonférentielle externe de la partie corps, et
ladite partie plaque possédant une épaisseur (t) supérieure ou égale à l'espace.

4. Dispositif électronique de la revendication 3, ladite partie plaque s'étendant en forme de secteur à partir de la surface circonférentielle externe de la partie corps.

5. Dispositif électronique de la revendication 3, ladite partie plaque s'étendant selon une forme semi-circulaire à partir de la partie corps.

6. Dispositif électronique de la revendication 2, ledit dispositif électronique comprenant un bossage circulaire (423) faisant saillie à partir de la partie corps vers le rail de guidage, et
ledit bossage étant logé de manière à pouvoir tourner dans une partie de gradin circulaire (2265) formée dans le rail de guidage.

7. Dispositif électronique de la revendication 3, ladite partie plaque comprenant au moins une saillie de verrouillage (4221) faisant saillie à partir de celle-ci dans une direction du rail de guidage, et
ladite saillie de verrouillage étant conçue pour être verrouillée dans au moins une rainure de verrouillage (2267) prévue au niveau d'une position correspondante du rail de guidage pour maintenir une position tournée du dispositif de retenue.

8. Dispositif électronique de la revendication 3, ladite partie plaque comprenant au moins une saillie de verrouillage (4222) faisant saillie à partir de celle-ci vers la surface interne du premier boîtier, et
ladite saillie de verrouillage étant conçue pour être verrouillée dans au moins une rainure de verrouillage (210b) prévue au niveau d'une position correspondante de la surface interne du premier boîtier pour maintenir une position tournée du dispositif de retenue.

9. Dispositif électronique de la revendication 3, ladite partie plaque comprenant au moins un ressort de contact (425) faisant saillie à partir de celle-ci vers le rail de guidage, et
ladite partie plaque étant électriquement raccordée au rail de guidage par l'intermédiaire d'au moins le ressort de contact.

10. Dispositif électronique de la revendication 3, au moins un dispositif de retenue comprenant deux, ou plus, dispositifs de retenue agencés à un intervalle prédéfini, et
lesdits deux, ou plus, dispositifs de retenue étant disposés dans le premier boîtier le long de la direction de coulissement.

11. Dispositif électronique de la revendication 10, lesdits deux, ou plus, dispositifs de retenue étant positionnés de sorte que des directions dans lesquelles des parties plaque respectives sont orientées diffèrent les unes des autres après la rotation.

12. Dispositif électronique de la revendication 1, ladite plaque de surface latérale comprenant au moins une saillie (431, 432) faisant saillie vers le rail de guidage, et
ladite saillie étant conçue pour être insérée dans l'au moins un trou traversant afin d'empêcher et/ou de réduire la rotation du dispositif de retenue.

13. Dispositif électronique de la revendication 1, au moins une partie du premier boîtier comprenant une partie conductrice à utiliser en tant qu'antenne, et
ledit dispositif de retenue comprenant un matériau conducteur pour raccorder électriquement la partie conductrice et le couvercle de cadre, le couvercle de cadre comprenant également un matériau conducteur.

14. Dispositif électronique de la revendication 2, comprenant en outre :
un élément de support (240) présentant une extrémité fixée au second boîtier et conçu pour être sélectivement reçu dans le premier boîtier de façon à ne pas être visible selon un mouvement du second boîtier ; et
un dispositif d'affichage souple (230) fixé à l'élément de support et fixé au second boîtier.

15. Dispositif électronique de la revendication 14, lesdites deux extrémités (2411) de l'élément de support étant couplées pour se déplacer le long de fentes de guidage (2261) formées dans le rail de guidage.
